# EUROPEAN PATENT SPECIFICATION

(11) **EP 4 129 081 B1**
(45) Date of publication and mention of the grant of the patent: **10.09.2025**
(21) Application number: 21775183.3
(22) Date of filing: 10.03.2021
(51) Int. Cl.: A23L 17/40, A23L 19/00, A23L 29/244, A23L 17/00, A23L 19/10, A23J 3/22, A23B 2/80, A23B 2/90, A23B 2/92, A23B 2/97

(54) **KONJAC GEL, METHOD FOR PRODUCING SAME, SHRIMP-LIKE FOOD USING SAID KONJAC GEL, AND METHOD FOR PRODUCING SHRIMP-LIKE AND VACUUM FREEZE-DRIED FOOD**
KONJAC-GEL, VERFAHREN ZU SEINER HERSTELLUNG, GARNELENARTIGES NAHRUNGSMITTEL UNTER VERWENDUNG DIESES KONJAC-GELS SOWIE VERFAHREN ZUR HERSTELLUNG VON GARNELENARTIGEM UND VAKUUMGEFRIERGETROCKNETEM NAHRUNGSMITTEL
GEL DE KONJAC, SON PROCÉDÉ DE PRODUCTION, ALIMENT DE TYPE CREVETTE UTILISANT LEDIT GEL DE KONJAC, ET PROCÉDÉ DE PRODUCTION D'ALIMENTS DE TYPE CREVETTES LYOPHILISÉS SOUS VIDE

(30) Priority: 27.03.2020 JP 2020056977; 27.03.2020 JP 2020056978; 27.03.2020 JP 2020056979
(43) Date of publication of application: 08.02.2023
(73) Proprietor: NISSIN FOODS HOLDINGS CO., LTD., Yodogawa-ku Osaka-shi, Osaka 532-8524 (JP)
(72) Inventor: TOKUHISA, Takahito, Osaka-shi Osaka 532-8524 (JP); NAKAMURA, Shino, Osaka-shi Osaka 532-8524 (JP); IWANO, Ayana, Osaka-shi Osaka 532-8524 (JP); WATANABE, Misuzu, Osaka-shi Osaka 532-8524 (JP); SETO, Jiro, Osaka-shi Osaka 532-8524 (JP)
(74) Representative: Mewburn Ellis LLP
(86) International application number: PCT/JP2021/009609
(87) International publication number: WO 2021/193072

(56) References cited:
- WO-A1-2012/081734
- WO-A1-2012/081734
- WO-A1-2017/183343
- JP-A- 2010 041 994
- JP-A- 2015 177 754
- JP-A- 2015 177 754
- JP-A- 2016 187 326
- JP-A- S59 146 560
- JP-A- S59 146 560
- JP-B1- 6 137 412
- US-B2- 8 715 762

## Description

### TECHNICAL FIELD

The present invention relates to a konjak gel with a shrimp-like texture, a method for producing such konjak gel, a method for producing a shrimp-like food containing such konjak gel, a method for producing a shrimp-like, vacuum-freeze-dried food containing such konjak gel and a substrate containing a pulverized konjak gel material, and a method for producing a shrimp-like, vacuum-freeze-dried food containing such konjak gel and a substrate.

### BACKGROUND ART

Imitation foods for various foods have conventionally been developed. Examples include imitation crab meat or artificial salmon roe. They have been developed as alternatives for expensive originals. In recent years, however, alternative foods have been developed that are not only for vegetarians, but also health- and environment-conscious foods, such as meat alternatives made from plant proteins.

Shrimps are collected and cultivated domestically. In addition, shrimps collected in various countries, or cultivated mainly in Southeast Asia are imported. Due to the recent increase in demand and the spread of disease, the price has been rising. In addition, in recent years, from the viewpoint of vegetarianism, health, and environment, there has been a need for inexpensive alternative foods of shrimp with a more authentic texture.

Patent Literatures 1 to 3, for example, disclose the alternative foods of shrimp.

Patent Literature 1 discloses a method for producing a shrimp-like or crab-flavored kamaboko (fish cake)-like food for protein intake-restricted patients and with a low-protein shrimp- or crab-like kamaboko texture, the method including: a step (A) of gelatinizing a material, which comprises 1 part by weight of a refined konjac powder, 0.5-4 parts by weight of water-insoluble dietary fibers having fiber lengths of 100 µm or shorter, water and a base, in hot water; a step (B) of cutting a gelatinized product produced in the step (A) into pieces having sizes of 5 mm or smaller; a step (C) of mixing the cut product produced in the step (B) with a refined konjac powder and water and shaping the resulting mixture; and a step (D) of gelatinizing a shaped product produced in the step (C) in hot water.

In addition, Patent Literature 2 relates to a lobster substitutional food usable as a substitute of lobster whose price sharply rises. Patent Literature 2 discloses a lobster substitutional food produced by mixing konjak powder, starch containing 90 wt% or more of amylopectin, an alkali agent and water, followed by heating, freezing and thawing.

Further, Patent Literature 3 relates to a method for producing a shrimp substitute food product with a shrimp-like texture. Patent Literature 3 discloses a method for producing a shrimp substitute food product, the method comprising mixing 1 to 10 wt% of wheat starch and/or high-amylose corn starch, 1.5 to 8 wt% of konjac flour, 1 to 7 wt% of cellulose, an alkaline agent, and water, heating the mixture, and freezing the heated product. Patent Literature 4 discloses a thin porous glucomannan, and indicates that the thin porous glucomannan serves as a food material that reinforces or imparts elastic texture by being mixed in paste products such as fish meat. However, there is no mention to the specific porosity or largest pore porosity required to attain improved chewing and elastic properties. Patent Literature 5 discloses a shrimp meat-like food product having a fibrous portion containing mannan and a binding portion binding between said fibrous portions and containing mannan. However, there is no mention to the importance of the overall porosity or largest pore porosity to attain improved chewing and elastic properties. Patent Literature 6 discloses a substitute meat food composition, which is prepared with a mixture containing: a konjac raw material in a hydrated and swollen state, further water-insoluble dietary fibers in an amount corresponding to 6 to 17 parts based on dry weight relative to 1 part based on dry weight of glucomannan in the konjac raw material, and an alkaline coagulant, wherein the konjac raw material forms a gel in the mixture, and the gelling is completed after formation of the mixture. However, there is no mention to the importance of the overall porosity or largest pore porosity to attain improved chewing and elastic properties.

Any of these techniques used gelatinized konjak, but the texture was not sufficient to produce a shrimp-like texture. Besides, there has been no description of dried foods that can be easily reconstituted with hot water, which is used for instant foods.

### CITATION LIST

### PATENT LITERATURE

Patent Literature 1: Japanese Patent No. 5874644
Patent Literature 2: Japanese Patent Laid-Open No. 2015-177754
Patent Literature 3: Japanese Patent No. 6137412
Patent Literature 4: JPS59146560A
Patent Literature 5: WO2017/183343A1
Patent Literature 6: US8715762B

### SUMMARY OF INVENTION

### TECHNICAL PROBLEM

The purpose of the present invention is to provide a konjak gel with a shrimp-like texture, a shrimp-like food using the konjak gel, and a dried, shrimp-like, vacuum-freeze-dried food that has a shrimp-like texture and can be easily reconstituted using, for instance, hot water.

### SOLUTION TO PROBLEM

The present inventors have focused and conducted intensive research on the internal structure of konjak gel to reproduce a shrimp-like texture, which was insufficient in conventional konjak gels. As a result, it has been found that a konjak gel with a porous structure provides a shrimp-like texture. Then, the present inventors have arrived at the invention. Meanwhile, shrimp-like foods that can be reconstituted with hot water, etc., were unable to be obtained by simply drying shrimp-like foods using the konjak gel with a porous structure. Thus, further intensive research has been conducted. As a result, the invention has been completed.

Specifically, there is provided a konjak gel comprising the following features (A) to (G): (A) a glucomannan content of 3.5 to 12 wt%; (B) a moisture content of 70 to 90 wt%; (C) a gel long side of 7 to 20 mm, wherein the gel long side is the longest length of the konjak gel; (D) a gel thickness of 0.5 to 1.5 mm, wherein the gel thickness is the shortest length of the konjak gel; (E) a porosity of 9 to 17% as measured for pores of 100 µm² or larger in a gel cross-section, wherein the porosity is the ratio of the total area of pores to the area of a cross section when the cross section of the gel is observed under an electron microscope; and (F) a largest pore porosity of 3 to 6% in the gel cross-section, wherein the largest pore porosity is the ratio of the area of the largest pore to the area of the cross-section of the gel; and (G) the gel having undergone freeze denaturation.

In addition, it is preferable that the konjac gel of the invention has a feature (H): (H) a content of modified starch of 4.5 to 18 wt%.

Here, a method for producing a konjak gel according to the invention preferably includes: a dough preparation step of mixing glucomannan in an amount of 2.5 to 4 wt% based on an weight of a dough, an alkaline agent, and water to prepare the dough with a pH of 10 to 11; a shaping step of shaping the prepared dough; a steaming step of steaming the shaped dough to prepare a gelatinous material; a freezing step of freezing the prepared gelatinous material; a shredding step of shredding the frozen gelatinous material into pieces with a long side size of 7 to 20 mm and a thickness of 0.5 to 1.5 mm; and a porous body formation step of subjecting each shredded gelatinous material to microwave or vacuum-freeze-drying to make porous the material with a moisture of 70 to 90 wt%, a porosity of 9 to 17% as measured for pores of 100 µm² or larger in a gel cross section, and a largest pore porosity of 3 to 6%.

In addition, it is preferable to add 3.5 to 8 wt% of modified starch based on the weight of the dough in the dough preparation step of the method for producing a konjak gel in the invention.

In addition, the method for producing a shrimp-like food according to the invention is preferably a method for producing a shrimp-like food containing a konjak gel and a substrate, the method including: a konjak gel preparation step of mixing 2.5 to 4 wt% of glucomannan based on an weight of a dough, an alkaline agent, and water to prepare the dough with a pH of 10 to 11, and then shaping and steaming the dough for gelation, freezing and shredding the gelatinous dough with a long side of 7 to 20 mm and a thickness of 0.5 to 1.5 mm in size, and then subjecting the resulting material to microwave or drying under reduced pressure to prepare a porous konjak gel having a moisture of 70 to 90 wt%, a porosity of 9 to 17% as measured for pores of 100 µm² or larger in a gel cross section, and a largest pore porosity of 3 to 6%; a substrate preparation step of mixing, based on an weight of a substrate, 3 to 4.5 wt% of glucomannan, 1 to 3 wt% of protein material, 8 to 15 wt% of modified starch, an alkali agent, and water to prepare the substrate with a pH of 9.5 to 10.5; a mixing step of mixing the substrate and the konjak gel at a ratio of 3:7 to 7:3 to prepare a mixture; a shaping step of shaping the mixture to prepare a shaped material; and a heating step of steaming the shaped material to be thermally solidified.

In addition, the method for producing a shrimp-like food using a konjak gel according to the invention preferably includes, after the heating step, a drying step of drying the surface of the thermally solidified, shaped material.

A method for producing a shrimp-like, vacuum-freeze-dried food using a konjak gel according to an embodiment of the invention provides a method for producing a shrimp-like, vacuum-freeze-dried food containing a konjak gel and a substrate containing a pulverized konjak gel material, the method including: a konjak gel preparation step of mixing 2.5 to 4 wt% of glucomannan based on an weight of a dough for the konjak gel, an alkaline agent, and water to prepare the konjak gel dough with a pH of 10 to 11, and then shaping and steaming the konjak gel dough for gelation, freezing and shredding the gelatinous konjak gel dough with a long side of 7 to 20 mm and a thickness of 0.5 to 1.5 mm in size, and then subjecting the resulting material to microwave or drying under reduced pressure to prepare a porous konjak gel having a moisture of 70 to 90 wt%, a porosity of 9 to 17% as measured for pores of 100 µm² or larger in a gel cross section, and a largest pore porosity of 3 to 6%; a pulverized konjak gel material preparation step of mixing, based on an weight of a dough for a pulverized konjak gel material, 2 to 4.5 wt% of glucomannan, 1 to 12 wt% of modified starch, an alkaline, and water to prepare the pulverized konjak gel material dough with a pH of 10 to 11, shaping and steaming the pulverized konjak gel material dough for gelation, and pulverizing the dough to prepare the pulverized konjak gel material; a substrate preparation step of mixing, based on an weight of a dough for a substrate, 1.5 to 4 wt% of glucomannan, an alkali agent, and water, further mixing the substrate dough prepared at a pH of 10 to 11 and the pulverized konjak gel material, so that the substrate contains 10 to 80 wt% of the pulverized konjak gel material, to prepare the substrate containing the pulverized konjak gel material; a mixture preparation step of mixing the konjak gel and the substrate at a ratio of 3:7 to 7:3 to prepare a mixture; a shaping step of shaping the mixture to prepare a shaped material; a heating step of heating the shaped material shaped in the shaping step to be thermally solidified; and a vacuum-freeze-drying step of freezing the thermally solidified shaped material to be vacuum-freeze-dried.

A method for producing a shrimp-like, vacuum-freeze-dried food using a konjak gel according to another embodiment of the invention provides a method for producing a shrimp-like, vacuum-freeze-dried food containing a konjak gel and a substrate, the method including: a konjak gel preparation step of mixing 2.5 to 4 wt% of glucomannan based on an weight of a dough for the konjak gel, an alkaline agent, and water to prepare the konjak gel dough with a pH of 10 to 11, and then shaping and steaming the konjak gel dough for gelation, freezing and shredding the gelatinous konjak gel dough with a long side of 7 to 20 mm and a thickness of 0.5 to 1.5 mm in size, and then subjecting the resulting material to microwave or drying under reduced pressure to prepare a porous konjak gel having a moisture of 70 to 90 wt%, a porosity of 9 to 17% as measured for pores of 100 µm² or larger in a gel cross section, and a largest pore porosity of 3 to 6%; a substrate preparation step of mixing, based on an weight of a substrate, 1.5 to 4 wt% of glucomannan, 0.1 to 0.6 wt% of an alkali agent, 1 to 3 wt% of sodium bicarbonate or 1 to 3 wt% of a foaming emulsifier, and water to prepare the substrate; a mixture preparation step of mixing the konjak gel and the substrate at a ratio of 3:7 to 7:3 to prepare a mixture; a shaping step of shaping the mixture to prepare a shaped material; a heating step of heating the shaped material shaped in the shaping step to be thermally solidified; and a vacuum-freeze-drying step of freezing the thermally solidified shaped material to be vacuum-freeze-dried.

### ADVANTAGEOUS EFFECTS OF INVENTION

The invention can provide a konjak gel with a shrimp-like texture, a shrimp-like food using the konjak gel, and a dried, shrimp-like, vacuum-freeze-dried food that has a shrimp-like texture and can be easily reconstituted using, for instance, hot water.

### BRIEF DESCRIPTION OF DRAWINGS

FIG. 1 is an electron micrograph of a cross section of a konjak gel sample in Test Example 1-1.
FIG. 2 is an electron micrograph of a cross section of a konjak gel sample in Test Example 1-2.
FIG. 3 is an electron micrograph of a cross section of a konjak gel sample in Test Example 1-3.
FIG. 4 is an electron micrograph of a cross section of a konjak gel sample in Test Example 1-4.
FIG. 5 is an electron micrograph of a cross section of a konjak gel sample in Test Example 1-5.
FIG. 6 is a graph showing the physical property test results of each sample in Test 1-1 as measured with a rheometer.
FIG. 7 is an electron micrograph of a cross section of a konjak gel sample in Test Example 1-6.
FIG. 8 is an electron micrograph of a cross section of a konjak gel sample in Test Example 1-7.
FIG. 9 is an electron micrograph of a cross section of a konjak gel sample in Test Example 1-8.
FIG. 10 is an electron micrograph of a cross section of a konjak gel sample in Test Example 1-9.
FIG. 11 is an electron micrograph of a cross section of a konjak gel sample in Test Example 1-10.
FIG. 12 is an electron micrograph of a cross section of a konjak gel sample in Test Example 1-11.
FIG. 13 is a graph showing the physical property test results of each sample in Test 1-2 as measured with a rheometer.
FIG. 14 is a photograph showing a mold for preparing a shrimp-like food(s) used in Test 2-1 to 4-2.
FIG. 15 is a photograph showing shrimp-like foods in Test Example 2-13.
FIG. 16 is a photograph showing shrimp-like, vacuum-freeze-dried foods in Test Example 3-2-1.

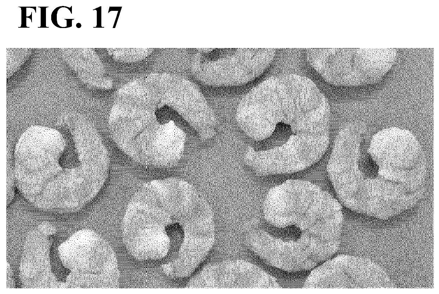

FIG. 17 is a photograph showing shrimp-like, vacuum-freeze-dried foods in Test Example 4-1-3.

### DESCRIPTION OF EMBODIMENTS

Hereinafter, the invention will be described in detail. The invention, however, is not limited to the following disclosure.

### <Konjak Gel>

Specifically, in a konjak gel according to the invention, the content of glucomannan in the gel is from 3.5 to 12 wt%; the moisture content is from 70 to 90 wt%; the gel long side size is from 7 to 20 mm, the thickness is from 0.5 to 1.5 mm; the porous structure is provided such that the porosity obtained by measuring pores of 100 µm² or larger in a gel cross section is from 9 to 17% and the largest pore porosity in the gel cross section is from 3 to 6%; and the gel has undergone freeze denaturation.

### (Glucomannan)

Glucomannan contained in a konjak gel of the invention preferably has a content of from 3.5 to 12 wt% based on the weight of the konjak gel. Glucomannan is used to form the backbone of the gel. Accordingly, if the content is less than 3.5 wt%, elasticity of the konjak gel becomes weak. If the amount of glucomannan added is more than 12 wt%, the content of other additive(s) becomes small. The moisture content of a konjak gel in the invention and/or the amount of other additive(s) added can affect the content of glucomannan contained in the konjak gel. The glucomannan content is more preferably from 8.5 to 10.5 wt%.

### (Modified Starch)

A konjak gel in the invention may contain modified starch. Inclusion of modified starch can elicit a texture that cannot be expressed by using only glucomannan. Various types of starch can be used, including potato starch, tapioca starch, wheat starch, and corn starch. Examples of the modified starch include crosslinked starch, etherified starch, acetylated starch, or oxidized starch. Due to freezing treatment, it is preferable to be resistant to freezing. Preferred is distarch phosphate, etherified starch, or etherified distarch phosphate. The content of modified starch is preferably from 4.5 to 18 wt% in the konjak gel. If the content is less than 4.5 wt%, an effect of the modified starch on improving the texture is weak. If the content is more than 18 wt%, a texture given by the modified starch is too strong. The moisture content of a konjak gel in the invention and/or the amount of other additive(s) added can affect the content of modified starch contained in the konjak gel. The modified starch content is more preferably from 13.5 to 16.5 wt%.

### (Moisture)

A konjak gel according to the invention preferably has a moisture of from 70 to 90 wt%. The moisture of a typical konjak gel may be frequently higher than 90%. By contrast, the moisture of a konjak gel according to the invention is evaporated because of, for instance, microwave treatment to obtain a porous structure. When the moisture is less than 70 wt%, the gel foams steeply and the porous structure becomes unsuitable. This deteriorates the texture. On the other hand, when the moisture is higher than 90 wt%, a sufficient porous structure cannot be obtained. Meanwhile, a konjak gel according to the invention may be used to prepare, for instance, a shrimp-like food. In this case, the moisture should be lower than that of a substrate other than the konjak gel. This can suppress deterioration of the texture of the konjak gel as caused by moisture transfer from the substrate. More preferable moisture content is from 70 to 80 wt%.

### (Shape)

The shape of the konjac gel in the invention is not limited to a rectangle, but can be an elliptic column or an irregular shape preferably with the long side of 7 to 20 mm and the thickness of 0.5 to 1.5 mm. As used herein, the long side indicates the longest length of the konjac gel, and the thickness indicates the shortest length of the konjac gel. For example, if the rectangular shape is 10 × 5 × 1 mm, the long side is 10 mm and the thickness is 1 mm. For a cylinder with a diameter of 1.5 mm and a length of 10 mm, the long side is 10 mm and the thickness is 1.5 mm. If the long side is shorter than 7 mm, it is difficult to feel the texture of konjac gel when chewed, and if the long side is larger than 20 mm, it is difficult to process (e.g., mix) the konjac gel. In addition, if the thickness is thinner than 0.5 mm, it is difficult to feel the elasticity of the konjac gel, and if the thickness is thicker than 1.5 mm, the elasticity of the konjac gel is felt too strongly. Further, the shape of the konjac gel should be as long and narrow as possible. The length (short side) in the three-dimensional direction other than the long side and the thickness is preferably 5 mm or less.

### (Porous Structure)

A konjak gel according to the invention has a porous structure having a porosity of 9 to 17%. The porosity in the invention is the ratio of the total area of pores to the area of a cross section as measured for the area of pores of 100 µm² or larger in the cross section when the cross section of the gel is observed under an electron microscope. If the porosity is less than 9%, the texture will be like a stuffy, elastic gel. On the other hand, if the porosity is higher than 17%, puffing occurs too much and overdrying occurs, resulting in a strong fibrous texture and difficulty in chewing.

In addition, the konjak gel of the invention has a porous structure with a largest pore porosity of 3 to 6%. The largest pore porosity in the invention is the ratio of the area of largest pore to the area of a cross section of the gel when the cross section of the gel is observed under an electron microscope. When the largest pore porosity is greater than 6%, the gel has large voids. This causes texture unevenness. Also, puffing occurs too much and overdrying occurs, resulting in a strong fibrous texture and difficulty in chewing. On the other hand, when the largest pore porosity is lower than 3%, the texture is like a gel with strong elasticity because the size of each void is too small. Thus, texture improvement due to the porous structure is difficult to obtain.

Note that it is preferable to observe a cross section perpendicular to the longitudinal direction as a cross section where the porous structure is measured. Observation should be performed using a scanning electron microscope, and images should be taken under low pressure at a magnification of 100 to 200×. For the measurement of voids, the area and the number of pores of 100 µm² or larger are measured using image analysis software used to measure pores from an image taken using an electron microscope. Examples of such image software is Image-Pro Premier 9.1 from Media Cybernetics, Inc. The porosity and the largest pore porosity are calculated from the measured data.

### (Freeze Denaturation)

A konjak gel of the invention has undergone freeze denaturation. The konjak gel freeze denaturation procedure is not particularly limited. The konjak gel can be frozen in a conventional freezer at about -18°C or in a quick freezer at -35°C or lower. The freezing treatment can denature the konjak gel, and as a result of which a suitable texture is given.

As described above, the content of glucomannan in the gel is from 3.5 to 12 wt%; the moisture content is from 70 to 90 wt%; the gel long side size is from 7 to 20 mm, and the thickness is from 0.5 to 1.5 mm; and the porous structure is provided such that the porosity obtained by measuring pores of 100 µm² or larger in a gel cross section is from 9 to 17% and the largest pore porosity in the gel cross section is from 3 to 6%. Use of the konjak gel having undergone freeze denaturation makes it possible to reproduce the springy texture of shrimp-like muscle fibers when chewed.

### <Method For Producing Konjak Gel>

Examples of a method for producing a konjak gel include the following processes.

### (Dough Preparation)

Glucomannan, an alkaline agent (e.g., sodium carbonate, calcium hydroxide), and water are mixed to prepare a dough. In addition to the alkaline agent, modified starch, salt, amino acid(s), seasoning, dye(s), flavor(s), and/or others can be added. The amount of glucomannan added is preferably in the range of 2.5 to 4 wt% based on the weight of the dough. If the amount is less than 2.5 wt%, the strength of the gel is weak. If the amount is more than 4 wt%, the strength of the gel is strong. Note that a glucomannan preparation or konjak flour may be used as glucomannan in this invention. The content of glucomannan is preferably the above additive amount. The amount of alkaline agent added is not particularly limited, and it is preferable to add the alkaline agent so as to set the pH of the dough to 10 to 11. The amount of modified starch added should be in the range of 3.5 to 8 **wt% based** on the weight of the dough. If the amount is higher than 8 wt%, the starch property becomes stronger, and if the amount is lower than 3.5 wt%, the starch effect is difficult to obtain. The amount of water added depends on the amount of other materials to be added. However, water should be added so that the moisture of the dough is 90 ± 5 wt% based on the weight of the dough. The dough mixing procedure may include: putting water in a device such as a food mixer; adding a mixture of powdered materials such as glucomannan, starch, and salt; then stirring and mixing them; and finally admixing an alkaline agent. Too early addition of the alkaline agent may cause the dough to start solidifying. This is not preferable.

### (Shaping Step)

The dough prepared in the dough preparation step is shaped. Examples of the shaping procedure include, but are not particularly limited to, the following processes: shaping by placing in a mold, shaping by spreading thinly on a plate, shaping by rolling, or shaping by placing in a tube or the like and extruding through a hole(s). There is no restriction on the shape to be formed, but it is preferable to form into a sheet shape or noodle strings. In the case of a sheet shape, the thickness is preferably from 0.5 to 1.5 mm. In the case of noodle strings, the diameter and the thickness are preferably from 0.5 to 1.5 mm after shaping.

### (Steaming Step)

The shaped dough is steamed to prepare a thermally solidified gelatinous material. The steaming procedure is not particularly limited as long as the dough is firmly and substantially solidified. Examples of the procedure include steaming with steam at 90°C or higher for 5 to 20 min or heating with hot water at 90°C or higher for 5 to 10 min.

### (Freezing Step)

The crude heat is removed from the thermally solidified gelatinous material, followed by freezing. The freezing denatures the gel. Accordingly, the gelatinous texture of konjak becomes a suitably elastic texture and easier to shred in the shredding step described below. The freezing procedure is not particularly limited, and, for instance, air-blast tunnel freezers, spiral freezers, wagon freezers or quick freezers, or brine-type flexible freezers are applicable. It is preferable to thoroughly freeze the gelatinous material until the product temperature is below about -18°C.

### (Shredding Step)

The frozen gelatinous material is cut into pieces with a given size. Examples of the cutting procedure include, but are not limited to, a cutting process using a roll blade or a cutting process using a knife blade. The gel is cut so that the longest side (long side) is from about 7 to 20 mm and the shortest side (thickness) is from 0.5 to 1.5 mm. Further, the shape of the konjac gel should be as long and narrow as possible. The length (short side) in the three-dimensional direction other than the long side and the thickness is preferably 5 mm or less. For example, the frozen gelatinous material may be in the form of noodle strings. In this case, the material may be cut with a rotary blade or a knife blade so that the length is from 7 to 20 mm. In the case of a sheet shape, the material should be cut into rectangles with a long side of 7 to 20 mm and a short side of 0.5 to 5 mm. If the long side is shorter than 7 mm, it is difficult to feel the texture of konjac gel when chewed, and if the long side is larger than 20 mm, it is difficult to process (e.g., mix) the konjac gel. In addition, if the thickness is thinner than 0.5 mm, it is difficult to feel the elasticity of the konjac gel, and if the thickness is thicker than 1.5 mm, the elasticity of the konjac gel is felt too strongly. Here, the closer the shape is to a square plate, the more difficult it is to process the gel when shrimp-like foods are prepared.

### (Porous Body Formation Step)

The gel shredded in the shredding step is made porous. Examples of the porous body formation step include microwave treatment and/or freeze drying, followed by moisture reconstitution. The porous structure may be provided such that the porosity obtained by measuring pores of 100 µm² or larger in a gel cross section is from 9 to 17% and the largest pore porosity in the gel cross section is from 3 to 6%. In the case of microwave treatment, the porous structure may be easily controlled if the treatment is performed at as low a wattage as possible. In addition, since moisture is also evaporated by the microwave treatment, there is little need to adjust the moisture. For example, in the case of processing at 200 W, the material is preferably processed for about 1 to 10 min. When the moisture is less than 70 wt%, the porosity increases and large pores are formed in the case of microwave treatment. On the other hand, when the moisture is higher than 90 wt%, the pore size is small and the porosity is insufficient. In the case of vacuum-freeze-drying, after drying once, water is absorbed to adjust the moisture to 70 to 90 wt%. If the moisture is less than 70 wt%, the texture is dry and hard with strong elasticity. On the other hand, if the moisture is higher than 90 wt%, the gel becomes fresher but less elastic. For both microwave treatment and vacuum-freeze-drying, the moisture more preferably ranges from 70 to 80 wt%. Note that the shape of the gel is almost the same as the shape after shredding, even if the porous body formation step is conducted by microwave treatment or vacuum-freeze-drying.

As described above, the prepared konjak gel has a shrimp-like texture and can be used for a shrimp-like food or shrimp-like, vacuum-freeze-dried food.

### <Method For Producing Shrimp-Like Food >

A shrimp-like food in the invention uses a konjak gel according to the invention. This konjak gel can be used for a shrimp-like food (e.g., a crab-flavored kamaboko) using fish meat paste as a substrate. However, in order to support vegetarianism in particular, the following describes a method for producing a shrimp-like food using glucomannan as a substrate according to the invention.

### (Substrate Preparation Step)

A substrate for a shrimp-like food in the invention serves to integrate and bond a konjak gel of the invention. In addition, a space between konjak gels is filled to give a shrimp-like pleasantness on the tongue and a solid material texture that cannot be expressed by the texture of konjak gel alone. Thus, the substrate plays a role in adjusting the overall texture of the shrimp-like food. Glucomannan, protein material, modified starch, and an alkaline agent are used for the substrate of the shrimp-like food in the invention.

As for the amount of glucomannan added to the substrate of the shrimp-like food in the invention, it is preferable to include 3 to 4.5 wt% of glucomannan based on the weight of the substrate. If the glucomannan amount is less than 3 wt%, the substrate is too soft, and if the glucomannan amount is more than 4.5 wt%, the shaping is difficult.

The protein material for the substrate of the shrimp-like food in the invention can be any protein-rich material. Egg whites such as egg white powder, soy proteins such as soybean powder or isolated soy protein powder, wheat proteins such as gluten, gelatin, or milk proteins such as skimmed milk powder or casein can be used. Inclusion of the protein component can give the substrate a shrimp-like muscle fiber-type pleasantness on the tongue. Examples of preferred protein material include egg white or soy proteins. Here, soy proteins are preferable for vegetarian compliance. The preferred amount of protein material to be added is preferably from 1 to 3 wt% based on the weight of the substrate. When the protein material amount is less than 1 wt%, the gel texture derived from glucomannan becomes stronger, and when the protein material amount is more than 3 wt%, the gel strength becomes weaker and the gel becomes softer.

Regarding the type of starch in the substrate of a shrimp-like food in the invention, various types of starch can be used, including potato starch, tapioca starch, wheat starch, and corn starch. Examples of modified starch include crosslinked starch, etherified starch, acetylated starch, or oxidized starch. In a shrimp-like food in the invention, it is preferable to use distarch phosphate, etherified starch, or etherified distarch phosphate, each of which retains water and is resistant to aging. The addition of modified starch gives the substrate a bodily texture and reduces the gelatinous texture of konjak. The amount of modified starch added is preferably from 8 to 15 wt% based on the weight of the substrate. If the modified starch amount is less than 8 wt%, a bodily texture imparted by the starch is weak. If the modified starch amount is more than 15 wt%, the texture imparted by the starch is too strong.

Examples of the alkaline agent for the substrate of the shrimp-like food in the invention include an alkaline agent such as sodium carbonate or calcium hydroxide, as long as the substrate can be made basic. The alkaline agent should be added at such an amount that the pH of the substrate becomes 9.5 to 10.5.

In addition to the above materials, salt, an amino acid(s), fat or oil, an emulsifier, crystalline cellulose powder, seasoning, a dye(s), and/or a flavor(s) may be added to prepare the substrate of the shrimp-like food in the invention. The crystalline cellulose powder does not largely affect the texture, and can give the shrimp-like food an insoluble solid material texture that cannot be expressed by glucomannan and/or starch. Provided that too much addition inhibits gelation of glucomannan. Too less addition gives the shrimp-like food a less solid material texture, namely a gel-like texture. Thus, the amount of crystalline cellulose powder to be added is preferably from 0.5 to 2.5 wt% based on the weight of the substrate. In addition, fat or oil can suppress the protein material-derived roughness and allows for dispersion of an oil-soluble dye(s) or flavor(s). Fat or oil in an emulsified state is preferably added to the substrate. The amount of fat or oil added is preferably from 1 to 3 wt% based on the weight of the dough. Too much addition inhibits glucomannan-mediated gel bonding. If the amount is too little, it is difficult to elicit an effect of fat or oil on improvement in the texture or flavor. Examples of the kind of fat or oil include sesame oil, rapeseed oil, rice oil, soybean oil, or corn oil.

How to prepare a substrate for a shrimp-like food in the invention will be described. Water or fat or oil may be used in a device such as a food mixer. In this case, an emulsified liquid is added to water; a mixture of powdered materials such as glucomannan, starch, crystalline cellulose, an amino acid(s), seasoning, and/or salt is added; the mixture is then stirred; and finally, an alkaline agent is admixed. Too early addition of the alkaline agent causes the dough to solidify too much. This is not preferable.

### (Mixing Step)

The substrate for the shrimp-like food prepared in the substrate preparation step is mixed with the konjak gel of the invention. The mixing procedure is not particularly limited as long as they are quickly and homogeneously blended without damaging the konjak gel. The mixing ratio (weight ratio) between the substrate and the konjak gel for the shrimp-like food is preferably from 3:7 to 7:3 for mixing. If the substrate for the shrimp-like food is too abundant, the konjak gel texture is difficult to feel. If the substrate for the shrimp-like food is too little, it is difficult to shape the mixture made of the konjak gel and the substrate for the shrimp-like food. Also, the konjak gel texture is strengthened.

### (Shaping Step)

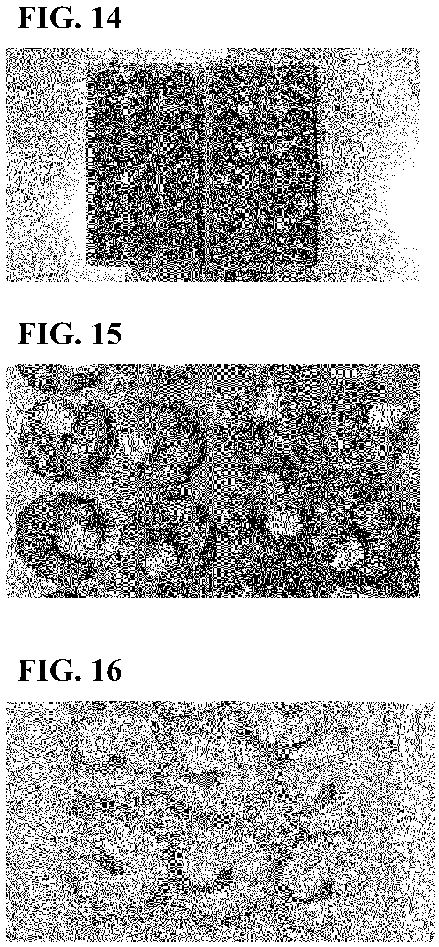

The mixture prepared at the mixing step is shaped to produce a shaped material. The shaping procedure is not particularly limited. The shaping may be performed by squeezing through a shrimp-shaped mold or mouthpiece illustrated in FIG. 14. In the case wherein a metal mold is used during the shaping step, the metal mold may be colored. This gives the surface shrimp-like coloring.

### (Heating Step)

The shaped material shaped in the shaping step is steamed and thermally solidified. The steaming procedure is preferably a process using steam in this case. In the case of boiling, the shape of the shaped material may be broken. The steaming procedure depends on the size of the shaped material to be prepared, and is not particularly limited. The procedure should be carried out such that the dough is thoroughly solidified. It is preferable to use steam at 90°C or higher for about 5 to 20 min.

### (Other Steps)

The shaped material thermally solidified at the heating step is cooled, and can then be eaten as it is as a shrimp-like food. In addition, if not used immediately, the shaped material can also be frozen for distribution as each frozen product. In this way, moisture transfer from the substrate to the konjac gel can be suppressed over time. As a result, the texture can be maintained until the time of use.

Further, the surface of the shaped material thermally solidified at the heating step is preferably dried. The drying procedure is not particularly limited, and hot-air drying or microwave drying may be carried out. The drying may reduce the surface moisture by several % and may provide a film on the surface. In the case of hot-air drying, hot-air at 40 to 150°C on the order of 10 s to 180 s may be provided. In the case of microwave treatment, the drying is performed at 200 W for about 30 s. The dry film may be formed to give a more surface springy texture sensation when the shrimp-like food is eaten.

As described above, use of a konjak gel with a porous structure in the invention makes it possible to produce a shrimp-like food with a shrimp-like texture.

### <Method For Producing Shrimp-Like, Vacuum-Freeze-Dried Food 1>

### <Konjak Gel Preparation Step>

The konjak gel may be prepared in the konjak gel preparation step of the method for producing a shrimp-like, vacuum-freeze-dried food in the invention.

### (Pulverized Konjak Gel Material Preparation Step)

Regarding a pulverized konjak gel material in the invention, the dried product can be highly reconstituted with water and is contained in a substrate for a shrimp-like, vacuum-freeze-dried food. This exerts an effect of promoting moisture-reconstitution of the substrate or the konjak gel for the shrimp-like, vacuum-freeze-dried food. The pulverized konjak gel material in the invention contains glucomannan and an alkaline agent as well as modified starch. Examples of the other material(s) that can be added include salt, an amino acid(s), seasoning, a dye(s), and/or a flavor(s).

The amount of glucomannan added to the pulverized konjak gel material in the invention is preferably from 2 to 4.5 wt% based on the weight of a dough for the pulverized konjak gel material. If the glucomannan amount is less than 2 wt%, the pulverized konjak gel material is soft, and if the glucomannan amount is more than 4.5 wt%, pulverization is difficult.

The type of modified starch added to the pulverized konjak gel material in the invention is not particularly limited. Various types of starch can be used, including potato starch, tapioca starch, wheat starch, and corn starch. In addition, examples of the denaturation process include cross-linking, etherification, acetylation, or oxidation. Examples of preferable modified starch include distarch phosphate or etherified distarch phosphate. In addition, the amount of modified starch added should be in the range of 1 to 12 wt% based on the weight of the dough. In the case of more than 12 wt%, the reconstitutability is too good. As a result, the substrate becomes soft. In the case of less than 1 wt%, the reconstitutability deteriorates. As a result, the pulverized konjak gel material-derived rough texture is strengthened. The modified starch amount is more preferably from 2 to 8 wt%.

An alkaline agent may be added to the pulverized konjak gel material in the invention as long as the dough for the pulverized konjak gel material can be made basic. Examples include an alkali agent such as sodium carbonate or calcium hydroxide. The alkaline agent should be added at such an amount that the pH of the dough becomes 10 to 11.

How to prepare a pulverized konjak gel material in the invention will be described. Like a konjak gel used for a shrimp-like, vacuum-freeze-dried food in the invention, a dough is prepared, shaped, and then steamed to prepare a gelatinous material. Specifically, first, water is put in a device such as a food mixer; a mixture of powdered materials such as glucomannan, modified starch, and salt is added; after the mixture is stirred, an alkaline agent is finally admixed to prepare a dough. Too early addition of the alkaline agent causes the dough to start solidifying. This is not preferable.

Next, the dough containing the prepared pulverized konjak gel material is shaped. Examples of the shaping procedure include, but are not particularly limited to, the following processes: shaping by placing in a mold, shaping by spreading thinly on a plate, shaping by rolling, or shaping by placing in a tube or the like and extruding through a hole(s). The shape formed is not particularly limited because pulverization is conducted.

The shaped, pulverized konjak gel material dough is steamed to prepare a thermally solidified gelatinous material. The steaming procedure is not particularly limited as long as the dough is firmly and substantially solidified. Examples of the procedure include steaming with steam at 90°C or higher for 5 to 20 min or heating with hot water at 90°C or higher for 5 to 10 min.

Next, the thermally solidified gelatinous material is pulverized. The pulverization procedure is not particularly limited, and the material can be pulverized by a pulverizer such as a cutter mill (e.g., a food mixer), a jet mill, or a hammer mill. If the particle size of the pulverized konjak gel material is too large, it is difficult for the substrate to integrate and the texture becomes uneven. Also, if the particle size is too small, the reconstitutability is poor. Preferably, the particle size should be adjusted so that the grain size of less than 300 µm is less than 10 wt% and the grain size of not less than 2700 µm is less than 10 wt%. As for the particle size, it is preferable to adjust the mode diameter to be from about 700 to 1700 µm.

### (Substrate Preparation Step)

The substrate for the shrimp-like, vacuum-freeze-dried food in the invention serves to together bond a konjak gel of the invention. The substrate is used to not only adjust the overall texture of the shrimp-like, vacuum-freeze-dried food, but also serves to make reconstitution after drying easier. The substrate for the shrimp-like, vacuum-freeze-dried food in the invention uses a pulverized konjak gel material and a substrate dough obtained by mixing glucomannan, an alkaline agent, and water.

The amount of glucomannan added to the substrate dough for the shrimp-like vacuum-freeze dried food in the invention is preferably from 1.5 to 4 wt% based on the weight of the substrate dough. If the glucomannan amount is less than 1.5 wt%, the substrate is too soft, and if the glucomannan amount is more than 4 wt%, the shaping is difficult.

Examples of the alkaline agent for the substrate dough of the shrimp-like vacuum-freeze-dried food in the invention include an alkaline agent such as sodium carbonate or calcium hydroxide, as long as the substrate dough can be made basic. The alkaline agent should be added at such an amount that the pH of the substrate dough becomes 9.5 to 10.5.

Examples of other material(s) that can be added to the substrate dough for the shrimp-like, vacuum-freeze-dried food in the invention include protein material, starch, salt, an amino acid(s), fat or oil, an emulsifier, crystalline cellulose powder, methylcellulose, seasoning, a dye(s), and/or a flavor(s).

The protein material may be any protein-rich material. Egg whites such as egg white powder, soy proteins such as soybean powder or isolated soy protein powder, wheat proteins such as gluten, gelatin, or milk proteins such as skimmed milk powder or casein can be used. Inclusion of the protein material can give the substrate a shrimp-like muscle fiber-type pleasantness on the tongue. Examples of preferred protein materials include egg whites or soy proteins. Here, soy proteins are preferable for vegetarian compliance. The preferred amount of protein material to be added is preferably from 1 to 3 wt% based on the weight of the substrate dough. When the protein material amount is less than 1 wt%, the gel texture derived from glucomannan becomes stronger, and when the protein material amount is more than 3 wt%, the gel strength becomes weaker and the gel becomes softer.

Various types of starch can be used, including potato starch, tapioca starch, wheat starch, and corn starch. They may be gelatinized and processed for usage. Examples of modified starch include crosslinked starch, etherified starch, acetylated starch, or oxidized starch. It is preferable to use gelatinized starch or crosslinked starch for the shrimp-like vacuum-freeze dried food in the invention. The addition of starch gives the substrate a bodily texture and reduces the gelatinous texture of konjak. The amount of starch added is preferably from 0.5 to 7 wt% based on the weight of the substrate dough. If the starch amount is less than 0.5 wt%, a bodily texture imparted by the starch is weak. If the starch amount is more than 7 wt%, the texture imparted by the starch is too strong.

The crystalline cellulose powder does not largely affect the texture, and can give the shrimp-like, vacuum-freeze-dried food an insoluble solid material texture that cannot be expressed by glucomannan and/or starch. Provided that too much addition inhibits gelation of glucomannan. If the amount is too small, the shrimp-like, vacuum-freeze-dried food has a less solid material texture and a more gel-like texture. Thus, the amount of crystalline cellulose powder to be added is preferably from 0.5 to 2.5 wt% based on the weight of the substrate dough.

In addition, fat or oil can suppress the roughness of the protein material and allows for dispersion of an oil-soluble dye(s) or flavor(s). Fat or oil in an emulsified state is preferably added to the substrate dough. The amount of fat or oil to be added is preferably from 3 to 11 wt% based on the weight of the substrate dough. Too much addition inhibits glucomannan-mediated gel bonding. If the amount is too little, it is difficult to elicit an effect of fat or oil on improvement in the texture or flavor. Examples of the kind of fat or oil include sesame oil, rapeseed oil, rice oil, soybean oil, or corn oil.

A process for preparing a substrate for a shrimp-like, vacuum-freeze-dried food in the invention will be described. Water or fat or oil may be used in a device such as a food mixer. In this case, an emulsified liquid is added to water; a mixture of powdered materials such as glucomannan, starch, crystalline cellulose, an amino acid(s), seasoning, and/or salt is added; the mixture is then stirred; an alkaline agent is admixed to prepare a substrate dough; and a pulverized konjak gel material is then admixed.

The amount of pulverized konjak gel material added to the substrate is preferably from 10 to 80 wt% based on the weight of the substrate. If the amount is less than 10 wt%, the reconstitutability cannot be imparted sufficiently. If the amount is more than 80 wt%, the shaping is difficult when the substrate and the konjak gel are mixed. The amount is more preferably from 20 to 60 wt%.

### (Mixture Preparation Step)

The substrate for the shrimp-like, vacuum-freeze-dried food as prepared in the substrate preparation step is mixed with the konjak gel prepared in the konjak gel preparation step. The mixing procedure is not particularly limited as long as they are quickly and homogeneously blended without damaging the konjak gel. The mixing ratio (weight ratio) between the substrate and the konjak gel for the shrimp-like, vacuum-freeze-dried food is preferably at a ratio of 3:7 to 7:3 for mixing. If the substrate for the shrimp-like, vacuum-freeze-dried food is too much, the konjak gel texture is difficult to feel. If the substrate for the shrimp-like food is too little, it is difficult to shape the mixture made of the konjak gel and the substrate for the shrimp-like, vacuum-freeze-dried food. Also, the konjak gel texture is strengthened.

### (Shaping Step)

The mixture prepared at the mixing step is shaped. The shaping procedure is not particularly limited. The shaping may be performed by squeezing through a shrimp-shaped mold or mouthpiece illustrated in FIG. 14. In the case wherein a metal mold is used during the shaping step, the metal mold may be colored. This gives the surface shrimp-like coloring.

### (Heating Step)

The shaped material shaped in the shaping step is steamed, and the mixture is thermally solidified. The steaming procedure is preferably a process using steam in this case. In the case of boiling, the shape of the shaped material may be broken. The steaming procedure depends on the size of the shaped material to be prepared, and is not particularly limited. The procedure should be carried out such that the dough is thoroughly solidified. It is preferable to use steam at 90°C or higher for about 5 to 20 min.

### <Vacuum-Freeze-Drying Step>

The thermally solidified mixture is frozen. The freezing means used may be a conventional technology. For instance, air-blast tunnel freezers, spiral freezers, wagon freezers or quick freezers, or brine-type flexible freezers are applicable. For example, the freezing can be implemented rapidly using a prefabricated quick freezer at about -30°C. The freezing procedure is not particularly limited, and the mixture should be frozen firmly so that its product temperature is -18°C and below.

The frozen mixture may be subjected to vacuum-freeze-drying under reduced pressure using a vacuum dryer to provide a shrimp-like, vacuum-freeze-dried food. The vacuum-freeze-drying allows for ingredients of instant food products as reconstituted using, for instance, hot water for instant noodles and/or instant soups. The freeze drying conditions are not particularly limited as long as the frozen mixture can be dried at a vacuum level and a shelf heating temperature that prevent thawing. The preferred range is at a vacuum level of 1.5 torr or less, a shelf heating temperature of 80°C or less, and a post-drying moisture of 1 to 5 wt%. In this way, the drying is performed.

As described above, glucomannan, an alkali agent, and a pulverized konjak gel material obtained by pulverizing a konjak gel are mixed to prepare a substrate. The substrate and the konjak gel with a porous structure are mixed, shaped, heated, frozen, and vacuum-freeze-dried to produce a shrimp-like, vacuum-freeze-dried food with a shrimp-like texture.

### <Method For Producing Shrimp-Like, Vacuum-Freeze-Dried Food 2>

### (Konjak Gel Preparation Step)

The konjak gel may be prepared in another embodiment of the konjak gel preparation step of the method for producing a shrimp-like, vacuum-freeze-dried food according to the invention.

### (Substrate Preparation Step)

Another embodiment of the substrate in the method for producing a shrimp-like, vacuum-freeze-dried food according to the invention serves to together bond a konjak gel of the invention. The substrate is used to not only adjust the overall texture of the shrimp-like, vacuum-freeze-dried food, but also serves to make reconstitution after drying easier.

Another embodiment of the substrate in the method for producing a shrimp-like, vacuum-freeze-dried food according to the invention uses glucomannan and an alkaline agent as well as a puffing agent or a foaming emulsifier.

The amount of glucomannan added to another embodiment of the substrate in the method for producing a shrimp-like, vacuum-freeze dried food according to the invention is preferably from 1.5 to 4 wt% based on the weight of the substrate. If the glucomannan amount is less than 1.5 wt%, the substrate is too soft, and if the glucomannan amount is more than 4 wt%, the shaping is difficult.

The type of puffing agent used for another embodiment of the substrate for the shrimp-like, vacuum-freeze-dried food in the invention can be anyone that contains sodium bicarbonate. There are a wide variety of puffing agents, ranging from a high foaming to low foaming type, and from a quick-acting to slow-acting type, depending on the type of auxiliary agent. Each has its own preferred additive amount. The preferred amount of sodium bicarbonate is preferably from 1 to 3 wt% based on the weight of the substrate. If the amount of puffing agent added is small, the reconstitutability is poor. If the amount is too much, the texture becomes soft. In addition, the flavor derived from the puffing agent is strengthened.

Examples of the alkaline agent used for another embodiment of the substrate in the method for producing a shrimp-like, vacuum-freeze-dried food according to the invention include an alkaline agent such as sodium carbonate or calcium hydroxide, as long as the substrate can be made basic. The alkaline agent should be added at such an amount that the pH of the substrate becomes 9.5 to 10.5.

The foaming emulsifier used for another embodiment of the substrate in the method for producing a shrimp-like, vacuum-freeze-dried food according to the invention may be any foaming emulsifier like those used for cakes or the like. Examples include sucrose fatty acid ester, glycerin fatty acid ester, sorbitan fatty acid ester, or polyglycerin fatty acid ester. Also, the amount of foaming emulsifier to be added is preferably from 1 to 3 wt% based on the weight of the substrate.

Examples of other material(s) that can be used for another embodiment of the substrate in the method for producing a shrimp-like, vacuum-freeze-dried food according to the invention include protein material, starch, salt, an amino acid(s), fat or oil, an emulsifier, crystalline cellulose powder, methylcellulose, seasoning, a dye(s), and/or a flavor(s).

The protein material may be any protein-rich material. Egg whites such as egg white powder, soy proteins such as soybean powder or isolated soy protein powder, wheat proteins such as gluten, gelatin, or milk proteins such as skimmed milk powder or casein can be used. Inclusion of the protein material can give the substrate a shrimp-like muscle fiber-type pleasantness on the tongue. Examples of preferred protein materials include egg whites or soy proteins. Here, soy proteins are preferable for vegetarian compliance. The preferred amount of protein material to be added is preferably from 1 to 3 wt% based on the weight of the substrate. When the protein material amount is less than 1 wt%, the gel texture derived from glucomannan becomes stronger, and when the protein material amount is more than 3 wt%, the gel strength becomes weaker and the gel becomes softer.

Various types of starch can be used, including potato starch, tapioca starch, wheat starch, and corn starch. They may be gelatinized and processed for usage. Examples of modified starch include crosslinked starch, etherified starch, acetylated starch, or oxidized starch. It is preferable to use gelatinized starch or crosslinked starch for the shrimp-like vacuum-freeze dried food in the invention. The addition of starch gives the substrate a bodily texture and reduces the gelatinous texture of konjak. The amount of starch added is preferably from 0.5 to 7 wt% based on the weight of the substrate. If the starch amount is less than 0.5 wt%, a bodily texture imparted by the starch is weak. If the starch amount is more than 7 wt%, the texture imparted by the starch is too strong.

The crystalline cellulose powder does not largely affect the texture, and can give the shrimp-like, vacuum-freeze-dried food an insoluble solid material texture that cannot be expressed by glucomannan and/or starch. Provided that too much addition inhibits gelation of glucomannan. If the amount is too small, the shrimp-like, vacuum-freeze-dried food has a less solid texture and a more gel-like texture. Thus, the amount of crystalline cellulose powder to be added is preferably from 0.5 to 2.5 wt% based on the weight of the substrate.

In addition, fat or oil can suppress the protein material-derived roughness and allows for dispersion of an oil-soluble dye(s) or flavor(s). Fat or oil in an emulsified state is preferably added to the substrate. The amount of fat or oil added is preferably from 3 to 11 wt% based on the weight of the dough. Too much addition inhibits glucomannan-mediated gel bonding. If the amount is too little, it is difficult to elicit an effect of fat or oil on improvement in the texture or flavor. Examples of the kind of fat or oil include sesame oil, rapeseed oil, rice oil, soybean oil, or corn oil.

A method for preparing another embodiment of substrate in the method for producing a shrimp-like, vacuum-freeze-dried food according to the invention will be described. Water or fat or oil may be used in a device such as a food mixer. In this case, an emulsified liquid is added to water; a mixture of powdered materials such as glucomannan, starch, crystalline cellulose, an amino acid(s), seasoning, and/or salt is added; the mixture is then stirred; finally, an alkaline agent is admixed. Too early addition of the alkaline agent causes the dough to solidify too much. This is not preferable.

### (Mixture Preparation Step)

Another embodiment of the substrate in the method for producing a shrimp-like, vacuum-freeze-dried food as prepared in the substrate preparation step is mixed with the konjak gel prepared in the konjak gel preparation step. The mixing procedure is not particularly limited as long as they are quickly and homogeneously blended without damaging the konjak gel. The mixing ratio (weight ratio) between the substrate and the konjak gel is preferably from 3:7 to 7:3 for mixing. If the substrate is too abundant, the konjak gel texture is difficult to feel. If the substrate is too little, it is difficult to shape the mixture made of the konjak gel and the substrate. Also, the konjak gel texture is strengthened.

### (Shaping Step)

The mixture prepared at the mixing step is shaped. The shaping procedure is not particularly limited. The shaping may be performed by squeezing through a shrimp-shaped mold or mouthpiece illustrated in FIG. 14. In the case wherein a metal mold is used during the shaping step, the metal mold may be colored. This gives the surface shrimp-like coloring.

### (Heating Step)

The mixture shaped in the shaping step is steamed, and the mixture is thermally solidified. In the case of using a puffing agent, the heating procedure may be implemented such that the puffing agent in the mixture foams and the mixture is firmly solidified. In the case of using a foaming emulsifier, the heating procedure may be implemented such that the mixture is firmly solidified and the foams are not crushed. For example, steaming with steam at 90°C or higher for 5 to 20 minutes is preferable.

### <Vacuum-Freeze-Drying Step>

The thermally solidified mixture is frozen. The freezing means used may be a conventional technology. For instance, air-blast tunnel freezers, spiral freezers, wagon freezers or quick freezers, or brine-type flexible freezers are applicable. For example, the freezing can be implemented rapidly using a prefabricated quick freezer at about -30°C. The freezing procedure is not particularly limited, and the mixture should be frozen firmly so that its product temperature is -18°C and below.

The frozen mixture may be subjected to vacuum-freeze-drying under reduced pressure using a vacuum dryer to provide a shrimp-like, vacuum-freeze-dried food. The vacuum-freeze-drying allows for ingredients of instant food products as reconstituted using, for instance, hot water for instant noodles and/or instant soups. The freeze drying conditions are not particularly limited as long as the frozen mixture can be dried at a vacuum level and a shelf heating temperature that prevent thawing. The preferred range is at a vacuum level of 1.5 torr or less, a shelf heating temperature of 80°C or less, and a post-drying moisture of 1 to 5 wt%. In this way, the drying is performed.

As described above, the substrate containing glucomannan and a puffing agent, and the konjak gel with a porous structure are mixed, shaped, heated, frozen, and vacuum-freeze-dried to produce a shrimp-like, vacuum-freeze-dried food with a shrimp-like texture.

With reference to Examples, the following describes, in more detail, embodiments of the invention.

### EXAMPLES

### <Test 1-1> To Evaluate Konjak Gel

### (Test Example 1-1)

The materials, excluding water and sodium carbonate, that were listed in Table 1 below were used to prepare a powder mixture. Next, water was put into a food mixer. The powder mixture was then added thereto. The resulting mixture was stirred using the food mixer for about 1 min to be homogeneously mixed. After that, sodium carbonate was added, and the mixture was stirred for another 1 min to prepare a dough.

The prepared dough was put into a plastic bag. The dough was stretched with a roller to have a thickness of 1 mm. The resulting dough was steamed in a steam chamber at 98°C for 15 min, and thermally solidified.

The thermally solidified gel was shredded with a shredder into pieces of 10 × 5 mm to prepare evaluation samples.

**[Table 1]**

| Dough material | Percentage (%) |
|---|---|
| Glucomannan | 3.5 |
| Etherified tapioca distarch phosphate | 4.5 |
| Glycine | 0.3 |
| Alanine | 0.1 |
| Arginine | 0.02 |
| Na glutamate | 0.02 |
| Na inosinate | 0.01 |
| Salt | 0.9 |
| Water | 90.3 |
| Alkaline agent (Sodium carbonate) | 0.35 |
| Total | 100 |

### (Test Example 1-2)

Like in Test Example 1-1, the dough was thermally solidified, and then frozen in a freezer at -40°C for 15 min. The frozen gel was shredded with a shredder into pieces of 10 × 5 mm, and thawed naturally to prepare evaluation samples.

### (Test Example 1-3)

The gels shredded in Test Example 1-2 were dried with hot air at 40°C to have a moisture of 73 wt%. In this way, evaluation samples were prepared.

### (Test Example 1-4)

The gels shredded in Test Example 1-2 were microwaved at 200 W for 8 min (to have a moisture of 73 wt%) to prepare evaluation samples.

### (Test Example 1-5)

The gels shredded in Test Example 1-2 were dried in a vacuum-freeze-drying machine at a shelf temperature of 60°C and a vacuum level of 1.5 torr or less until the moisture became 2 wt%. After that, water was added and the samples were reconstituted until the moisture became 73 wt%. In this way, evaluation samples were prepared.

The evaluation samples in Test Examples 1-1 to 1-5 were subject to electron microscopic structural analysis, rheometer-using physical property evaluation, and sensory evaluation. In the electron microscopic structure analysis, a scanning electron microscope (JEOL JCM-6380LA, 100× magnification) was used for photography. The photographed digital images were analyzed using Image-Pro Premier 9.1 from Media Cybernetics, Inc. The measurements include the number of pores of 100 µm² or larger, the cross-sectional area of each sample observed, the total area of the pores, and the area of the largest pore. After the measurements, the porosity (total pore area/cross-sectional area), the average pore porosity (porosity/number of pores), and largest pore porosity (area of the largest pore/cross-sectional area) were calculated. The sample number was N = 5, and the average was defined as a sample value.

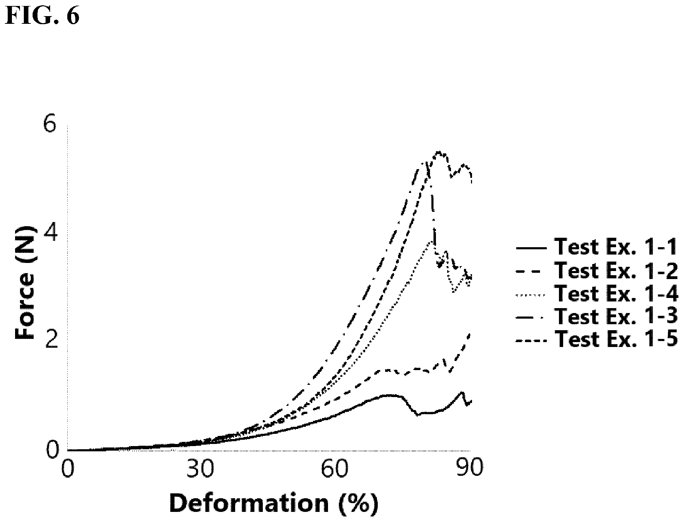

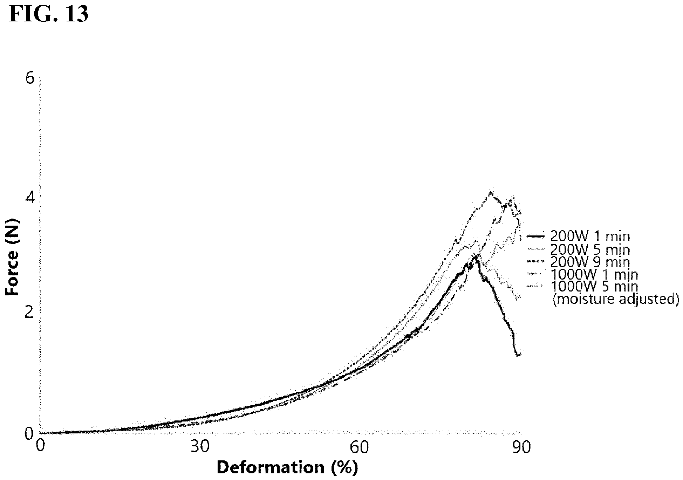

Regarding the measurement with a rheometer, a uniaxial compression-tension rheometer (RE-33005C, Yamaden Co., Ltd.) was used to perform uniaxial constant velocity indentation tests at a travel speed of 0.1 mm/s and a maximum deformation of 90%. A load cell with a rated capacity of 19.6 N and a cylindrical plunger with a diameter of 3.0 mm were used. Here, the evaluation samples were measured such that they were pressed perpendicular to the long side of each gel. The measurements were conducted every 0.01 s, and the force (load) and deformation were measured. The measured data were plotted on a graph with the Y-axis being the force and the X-axis being the deformation, and force-deformation curves were drawn as shown in FIGs. 6 and 13.

The organoleptic test was conducted by five skilled panelists. The shrimp-like texture was graded as follows: 5 for very good, 4 for good, 3 for generally acceptable, 2 for unsuitable, and 1 for definitely unsuitable.

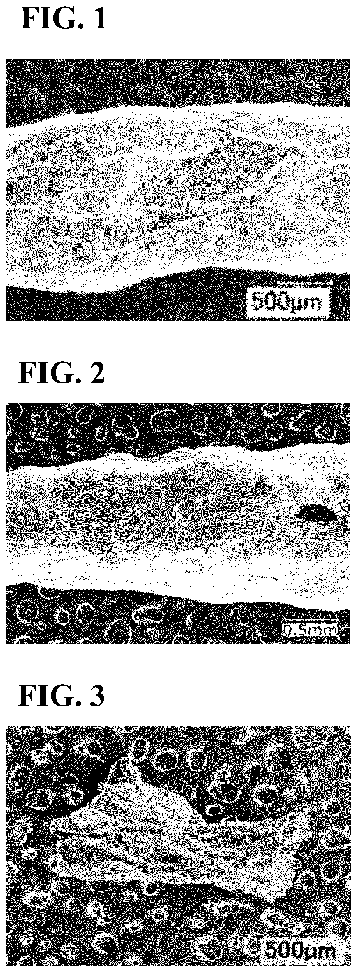

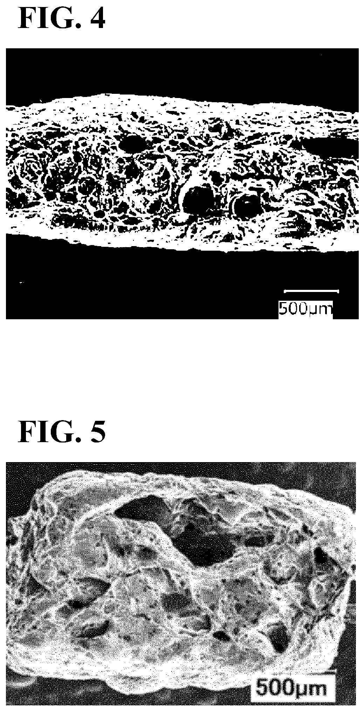

The results of structural analysis and sensory evaluation are shown in Table 2 below. In addition, typical electron micrographs of respective evaluation samples are shown in FIGs. 1 to 5. Further, a graph showing the results of rheometer measurements for each sample is shown in FIG. 6.

**[Table 2]**

| Test Example | Treatment | Sample moisture (%) | Porosity (%) | Number of pores (count) | Total pore area (µm²) | Sheet cross-sectional area (µm²) | Average pore porosity (%) | Largest pore (µm²) | Largest pore porosity (%) | Sensory evaluation | Comments |
|---|---|---|---|---|---|---|---|---|---|---|---|
| 1-1 | No-treatment | 91.5 | 0.6 | 33 | 27427 | 4501092 | 0.02 | 6530 | 0.1 | 1 | Weakly elastic, watery. |
| 1-2 | Freezing treatment | 90.5 | 1.5 | 10 | 59572 | 4028878 | 0.15 | 50663 | 1.3 | 1.5 | Weakly elastic, less crispy. |
| 1-3 | Freezing-Hot air drying | 73.0 | 4.1 | 21 | 50021 | 1228659 | 0.19 | 11359 | 0.9 | 2 | Strongly elastic, but too crispy. |
| 1-4 | Freezing-Microwave | 73.0 | 12.6 | 104 | 207603 | 1647640 | 0.12 | 72496 | 4.4 | 5 | Moderately elastic, with a springy shrimp fiber-like texture, very good. |
| 1-5 | Freezing-Vacuum freeze drying | 1.9 73.0 | 14.7 | 162 | 766282 | 5227561 | 0.09 | 207141 | 4.0 | 4 | Moderately elastic, but with a slightly weaker shrimp fiber-like texture than in Test Example 1-4. |

The sensory evaluation results were as follows. As shown in Test Examples 1-4 and 1-5, the konjak gel was frozen, microwaved, frozen, vacuum-freeze-dried, and then moisture-reconstituted. These products had a good shrimp-like texture. The structures of the samples of Test Examples 1-4 and 1-5 were observed under an electron microscope. As a result, it was found that a larger number of voids was present in the gel than in the other Test Examples. In addition, the largest pore porosity was 3% or more when compared to the other Test Examples. Thus, there were voids with a certain size.

The physical properties of the evaluation samples in the respective test sections were measured with a rheometer. As shown in FIG. 6, the frozen sample of Test Example 1-2 was compared to the unfrozen sample of Test Example 1-1. As a result, the strength at break was increased. In addition, no peaks appeared. This seems to indicate that the freezing denaturation causes the gel to be difficult to break. In addition, the strength at break of any of the dried samples of Test Examples 1-3 to 1-5 was higher than that of the undried sample of Test Example 1-2. A peak also appeared, indicating that the drying causes the gel to be readily to break. However, in the case of hot-air drying (Test Example 1-3), the drop after break was large. By contrast, in the vacuum-freeze-drying (Test Example 1-4) and microwave drying (Test Example 1-5), the drop after break was small and the next peak (resistance) occurred. This seems to be due to the presence of internal voids, which cause the breaking gel to stop at the internal voids and become the next resistance, instead of breaking all at once. It is believed that this continuous resistance gives a texture similar to a springy texture of shrimp muscle fibers when chewed.

### <Test 1-2> To Examine Porous Structure of Konjak Gel

### (Test Example 1-6)

The same procedure as in Test Example 1-4 was repeated, except that the microwave treatment was conducted at 200 W for 1 min, to prepare evaluation samples (with a moisture of 89.5 wt%).

### (Test Example 1-7)

The same procedure as in Test Example 1-4 was repeated, except that the microwave treatment was conducted at 200 W for 5 min, to prepare evaluation samples (with a moisture of 80 wt%).

### (Test Example 1-8)

The same procedure as in Test Example 1-4 was repeated, except that the microwave treatment was conducted at 200 W for 10 min, to prepare evaluation samples (with a moisture of 71.0 wt%).

### (Test Example 1-9)

The same procedure as in Test Example 1-4 was repeated, except that the microwave treatment was conducted at 1000 W for 1 min, to prepare evaluation samples (with a moisture of 82 wt%).

### (Test Example 1-10)

The same procedure as in Test Example 1-4 was repeated, except that the microwave treatment was conducted at 1000 W for 5 min, to prepare evaluation samples (with a moisture of 1.5 wt%).

### (Test Example 1-11)

The same procedure as in Test Example 1-4 was repeated to prepare evaluation samples, except that the microwave treatment was conducted at 1000 W for 5 min and water was used for moisture-reconstitution to have a moisture of 71 wt%.

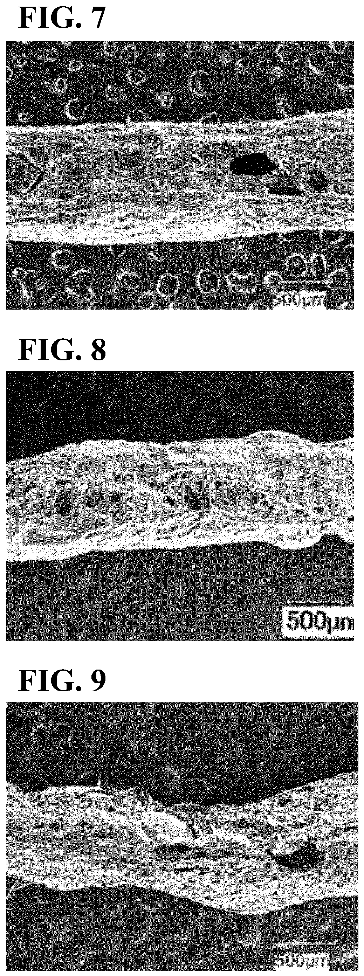

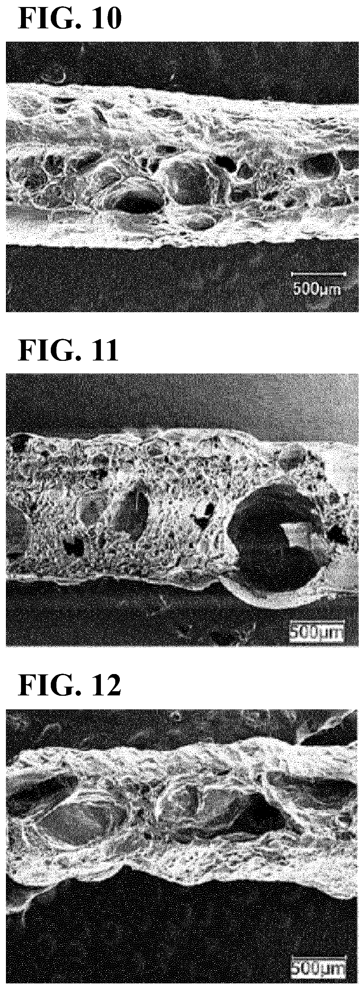

Like in Test 1-1, the evaluation samples in Test 1-2 were subject to electron microscopic structural analysis, rheometer-using physical property evaluation, and sensory evaluation. Note that the physical properties in the Test Section 1-10 were not measured because the sample was dried and too hard. The results of structural analysis and sensory evaluation are shown in Table 3 below. In addition, typical electron micrographs of respective evaluation samples are shown in FIGs. 7 to 12. Further, a graph showing the results of rheometer measurements for each sample is shown in FIG. 13. Furthermore, Table 4 below shows the content of each component after microwave treatment in Test Examples 1-6 to 1-9.

**[Table 3]**

| Test Example | Treatment | Sample moisture (%) | Porosity (%) | Number of pores (count) | Total pore area (µm²) | Sheet cross-sectional area (µm²) | Average pore porosity (%) | Largest pore (µm²) | Largest pore porosity (%) | Sensory evaluation | Comments |
|---|---|---|---|---|---|---|---|---|---|---|---|
| 1-6 | 200 W 1 min | 89.5 | 9.2 | 57 | 208648 | 2267916 | 0.16 | 70305 | 3.1 | 3 | Slightly watery with a weak fibrous texture, but elastic and generally acceptable. |
| 1-7 | 200 W 5 min | 80.0 | 10.6 | 65 | 221687 | 2091386 | 0.16 | 89930 | 4.3 | 4 | Inferior to Test Example 1-8, but with moderate elasticity and a shrimp-like fibrous texture. |
| 1-8 | 200 W 10 min | 71.0 | 14.0 | 68 | 289169 | 2065496 | 0.21 | 107406 | 5.2 | 5 | Moderately elastic, with a springy shrimp fiber-like texture, very good. |
| 1-9 | 1000 W 1 min | 82.9 | 16.6 | 73 | 520239 | 3133969 | 0.23 | 181770 | 5.8 | 3.5 | With better elasticity and fibrous texture than in Test Example 1-6, but inferior to Test Example 1-7. |
| 1-10 | 1000 W 5 min | 1.3 | 38.2 | 234 | 1438663 | 3765132 | 0.16 | 523730 | 13.9 | 1 | Dried and too hard. |
| 1-11 | 1000 W 5 min moisture adjusted | 71.0 | 25.8 | 77 | 701733 | 2724769 | 0.33 | 230788 | 8.5 | 2 | Moderately elastic, but with a too much fibrous texture and hard to chew through. |

**[Table 4]**

| Test Example | Test Example 1-6 | | Test Example 1-7 | | Test Example 1-8 | | Test Example 1-9 | |
|---|---|---|---|---|---|---|---|---|
| Material | Formulation | After porous body formation treatment | Formulation | After porous body formation treatment | Formulation | After porous body formation treatment | Formulation | After porous body formation treatment |
| Glucomannan | 3.5 | 3.8 | 3.5 | 7.2 | 3.5 | 10.5 | 3.5 | 6.5 |
| Etherified tapioca distarch phosphate | 4.5 | 4.9 | 4.5 | 9.3 | 4.5 | 13.5 | 4.5 | 8.4 |
| Glycine | 0.3 | 0.3 | 0.3 | 0.6 | 0.3 | 0.9 | 0.3 | 0.6 |
| Alanine | 0.1 | 0.1 | 0.1 | 0.2 | 0.1 | 0.3 | 0.1 | 0.2 |
| Arginine | 0.02 | 0.02 | 0.02 | 0.04 | 0.02 | 0.06 | 0.02 | 0.04 |
| Sodium glutamate | 0.02 | 0.02 | 0.02 | 0.04 | 0.02 | 0.06 | 0.02 | 0.04 |
| Sodium inosinate | 0.01 | 0.01 | 0.01 | 0.02 | 0.01 | 0.03 | 0.01 | 0.02 |
| Salt | 0.9 | 1.0 | 0.9 | 1.9 | 0.9 | 2.7 | 0.9 | 1.7 |
| Water | 90.3 | 89.5 | 90.3 | 80.0 | 90.3 | 71.0 | 90.3 | 82.0 |
| Sodium carbonate (Alkaline agent) | 0.35 | 0.4 | 0.35 | 0.7 | 0.35 | 1.0 | 0.35 | 0.6 |
| Total | 100 | 100.0 | 100 | 100.0 | 100 | 100.0 | 100 | 100.0 |

The strength and duration of microwave treatment were varied and tested. As a result, up to 70 wt% moisture, the moisture gradually decreased. However, when the moisture dropped below 70 wt%, the moisture decreased rapidly. This seems to be caused by the rapid evaporation of internal moisture when the moisture falls below 70 wt%, resulting in foaming. The results of the organoleptic test demonstrated that the texture of the dried samples was hard and poor, as shown in Test Example 1-10. As shown in Test Example 1-11, in the samples obtained by moisture-reconstituting the dried samples, the texture somewhat improved, but the texture was very fibrous and the sample was difficult to chew through. As shown in Test Examples 1-6 to 1-9, the closer the moisture was to 70 wt%, the better the texture became. The smaller the decrease in moisture, the waterier and more gelatinous the texture. Also, Test Examples 1-7 and 1-9 are compared. In the case of treatment at the same energy, the texture was better when the sample was treated for a long time at low wattage than when the sample was treated for a short time at high wattage.

The porous structure was observed under an electron microscope. As shown in Test Examples 1-6 to 1-9, while the moisture was 70 wt% or higher, the porosity ranged from 9 to 17%, the largest pore porosity ranged from 3 to 6%, and the number of pores was not so different. However, as shown in Test Examples 1-10, when the sample was too dry, puffing occurred and the porosity increased significantly. Also, the largest pore porosity was high, large voids were formed, and the number of pores increased significantly. As shown in Test Example 1-11, the number of pores decreased when the moisture was reconstituted. However, the porosity was still 20% or higher, and the largest pore porosity was 8% or higher.

As shown in FIG. 13, the physical properties of the samples of Test Examples 1-6 to 1-9 were measured with a rheometer. As a result, multiple small peaks occurred as the deformation rate increased. In Test Examples 1-6 and 1-9, which have a high moisture, the drop in force is relatively steep after the maximum force is reached and the gel is broken. This seems to indicate that the shrimp muscle fiber-like texture is weak because the texture is crispy although elastic. By contrast, in Test Examples 1-7 and 1-8, the fall of force after reaching the maximum value is gradual. This seems to resemble a springy texture of shrimp muscle fibers when chewed. However, in Test Example 1-11, as in Test Examples 1-6 to 1-9, multiple small peaks were observed, but the force continued to increase after the large peak. This may indicate that the texture is too fibrous and the sample is difficult to chew through.

### <Test 1-3> To Investigate Formulation of Konjak Gel

### (Test Example 1-12) to (Test Example 1-20)

The same procedure as in Test Example 1-8 was repeated, except that each formulation of konjak gel was prepared as in Table 5 below, to prepare a konjak gel. However, the duration of microwave treatment was fine-tuned for each Test Example so that the moisture content was 71 wt%.

**[Table 5]**

| Test Example | Test Example 1-8 | | Test Example 1-12 | | Test Example 1-13 | | Test Example 1-14 | | Test Example 1-15 | |
|---|---|---|---|---|---|---|---|---|---|---|
| Material | Formulation | After porous body formation treatment | Formulation | After porous body formation treatment | Formulation | After porous body formation treatment | Formulation | After porous body formation treatment | Formulation | After porous body formation treatment |
| Glucomannan | 3.5 | 10.5 | 2.5 | 8.3 | 4.0 | 11.4 | 3.5 | 10.7 | 3.5 | 10.2 |
| Etherified tapioca distarch phosphate | 4.5 | 13.5 | 4.5 | 15.0 | 4.5 | 12.8 | 4.5 | 13.8 | 4.5 | 13.1 |
| Glycine | 0.3 | 0.9 | 0.3 | 1.0 | 0.3 | 0.9 | 0.3 | 0.9 | 0.3 | 0.9 |
| Alanine | 0.1 | 0.3 | 0.1 | 0.3 | 0.1 | 0.3 | 0.1 | 0.3 | 0.1 | 0.3 |
| Arginine | 0.02 | 0.06 | 0.02 | 0.1 | 0.02 | 0.06 | 0.02 | 0.06 | 0.02 | 0.06 |
| Sodium glutamate | 0.02 | 0.06 | 0.02 | 0.1 | 0.02 | 0.06 | 0.02 | 0.06 | 0.02 | 0.06 |
| Sodium inosinate | 0.01 | 0.03 | 0.01 | 0.0 | 0.01 | 0.03 | 0.01 | 0.03 | 0.01 | 0.03 |
| Salt | 0.9 | 2.7 | 0.9 | 3.0 | 0.9 | 2.6 | 0.9 | 2.8 | 0.9 | 2.6 |
| Water | 90.3 | 71.0 | 91.3 | 71.0 | 89.8 | 71.0 | 90.55 | 71.0 | 90.05 | 71.0 |
| Sodium carbonate (Alkaline agent) | 0.35 | 1.0 | 0.35 | 1.2 | 0.35 | 1.0 | 0.10 | 0.3 | 0.60 | 1.7 |
| Total | 100 | 100.0 | 100 | 100.0 | 100 | 100.0 | 100 | 100.0 | 100 | 100.0 |
| pH | 10.5 | | 10.5 | | 10.7 | | 10.0 | | 11.0 | |
| Sensory evaluation | 5 | | 3.5 | | 3.5 | | 3 | | 3 | |
| Comments | Moderately elastic, with a springy shrimp fiber-like texture, very good. | | Less elastic than in Test Example 1-8, but generally acceptable or better. | | More elastic than in Test Example 1-8, but generally acceptable or better. | | Less elastic than in Test Example 1-8, but generally acceptable. | | With a konjac-like texture when compared to Test Example 1-8, and with a slight harsh taste, but generally acceptable. | |

| Test Example | Test Example 1-16 | | Test Example 1-17 | | Test Example 1-18 | | Test Example 1-19 | | Test Example 1-20 | |
|---|---|---|---|---|---|---|---|---|---|---|
| Material | Formulation | After porous body formation treatment | Formulation | After porous body formation treatment | Formulation | After porous body formation treatment | Formulation | After porous body formation treatment | Formulation | After porous body formation treatment |
| Glucomannan | 3.5 | 7.7 | 3.5 | 8.3 | 3.5 | 9.1 | 3.5 | 10.0 | 3.5 | 11.7 |
| Etherified tapioca distarch phosphate | 8.0 | 17.6 | 7.0 | 16.6 | 6.0 | 15.5 | 5.0 | 14.2 | 3.5 | 11.7 |
| Glycine | 0.3 | 0.7 | 0.3 | 0.7 | 0.3 | 0.8 | 0.3 | 0.9 | 0.3 | 1.0 |
| Alanine | 0.1 | 0.2 | 0.1 | 0.2 | 0.1 | 0.3 | 0.1 | 0.3 | 0.1 | 0.3 |
| Arginine | 0.02 | 0.04 | 0.02 | 0.05 | 0.02 | 0.1 | 0.02 | 0.06 | 0.02 | 0.07 |
| Sodium glutamate | 0.02 | 0.04 | 0.02 | 0.05 | 0.02 | 0.1 | 0.02 | 0.06 | 0.02 | 0.07 |
| Sodium inosinate | 0.01 | 0.02 | 0.01 | 0.02 | 0.01 | 0.0 | 0.01 | 0.03 | 0.01 | 0.03 |
| Salt | 0.9 | 2.0 | 0.9 | 2.1 | 0.9 | 2.3 | 0.9 | 2.6 | 0.9 | 3.0 |
| Water | 86.8 | 71.0 | 87.8 | 71.0 | 88.8 | 71.0 | 89.8 | 71.0 | 91.3 | 71.0 |
| Sodium carbonate (Alkaline agent) | 0.35 | 0.8 | 0.35 | 0.83 | 0.35 | 0.91 | 0.35 | 1.00 | 0.35 | 1.2 |
| Total | 100 | 100.0 | 100 | 100.0 | 100 | 100.0 | 100 | 100.0 | 100 | 100.0 |
| pH | 10.7 | | 10.7 | | 10.5 | | 10.5 | | 10.5 | |
| Sensory evaluation | 3 | | 4 | | 5 | | 5 | | 3 | |
| Comments | Not as crispy as in Test Example 1-8, but generally acceptable. | | Less crispy than in Test Example 1-8, but generally good. | | Similar to Test Example 1-8. | | Similar to Test Example 1-8. | | Slightly soft but generally acceptable. | |

The amount of glucomannan added to the dough for konjak gel is found to be preferably from 2.5 to 4 wt%, as shown in Test Examples 1-8, 1-12, and 1-13. In addition, the amount of modified starch added to the dough for konjak gel is found to be preferably from 3.5 to 8 wt%, as shown in Test Examples 1-16 to 1-10. Further, the amount of alkaline agent added to the dough for konjak gel is found to be preferable when the pH of the dough is from 10 to 11, as shown in Test Examples 1-14 and 1-15.

The properties of konjak gel are affected by the dough formulation as shown in Tables 4 and 5. However, the moisture of konjak gel decreases as the porous body formation treatment proceeds. Thus, the content of each component in the konjak gel changes greatly depending on the amount of decrease in moisture. Also, as the amount of one component added increases, the contents of the other components also change. Thus, based on the results in Tables 4 and 5, it seems that the content of glucomannan in the konjak gel is preferably from about 3.5 to 12 wt% and more preferably from about 8.5 to 10.5 wt%. The content of modified starch in the konjak gel seems to be preferably from about 4.5 to 18 wt% and more preferably from 13.5 to 16.5 wt%.

### <Test 1-4> Shape of Konjak Gel

### (Test Example 1-21)

The same procedure as in Test Example 1-8 was repeated, except that the thickness of konjak gel was set to 0.5 mm, to prepare a konjak gel.

### (Test Example 1-22)

The same procedure as in Test Example 1-8 was repeated, except that the thickness of konjak gel was set to 1.5 mm, to prepare a konjak gel.

### (Test Example 1-23)

The same procedure as in Test Example 1-8 was repeated, except that the thermally solidified gel was shredded with a shredder into pieces of 5 × 5 mm, to prepare a konjak gel.

### (Test Example 1-24)

The same procedure as in Test Example 1-8 was repeated, except that the thermally solidified gel was shredded with a shredder into pieces of 7 × 5 mm, to prepare a konjak gel.

### (Test Example 1-25)

The same procedure as in Test Example 1-8 was repeated, except that the thermally solidified gel was shredded with a shredder into pieces of 20 × 5 mm, to prepare a konjak gel.

### (Test Example 1-26)

The same procedure as in Test Example 1-8 was repeated, except that the thermally solidified gel was shredded with a shredder into pieces of 10 × 2.5 mm, to prepare a konjak gel.

### (Test Example 1-27)

The same procedure as in Test Example 1-8 was repeated, except that the thermally solidified gel was shredded with a shredder into pieces of 10 × 10 mm, to prepare a konjak gel.

### (Test Example 1-28)

The same procedure as in Test Example 1-8 was repeated, except that the thermally solidified gel was shredded with a shredder into pieces of 2.5 × 2.5 mm, to prepare a konjak gel.

Test 1-4, like Test 1-1, was subject to sensory evaluation. The sensory evaluation results are shown in Table 6 below.

**[Table 6]**

| Test Example | Sheet long side (mm) | Sheet short side (mm) | Sheet thickness (mm) | Sensory evaluation | Comments |
|---|---|---|---|---|---|
| 1-8 | 10.0 | 5.0 | 1.0 | 5 | Moderately elastic, with a springy shrimp fiber-like texture, very good. |
| 1-21 | 10.0 | 5.0 | 0.5 | 3.5 | With a less fibrous texture than in Test Example 1-8, but generally acceptable or better. |
| 1-22 | 10.0 | 5.0 | 1.5 | 3 | With a stronger sensation of chewing a thick gel than in Test Examples 1-8, but generally acceptable |
| 1-23 | 5.0 | 5.0 | 1.0 | 2 | With a weak sensation of chewing a konjak gel. |
| 1-24 | 7.0 | 5.0 | 1.0 | 3.0 | With a sensation of chewing a konjak gel, and generally acceptable. |
| 1-25 | 20.0 | 5.0 | 1.0 | 5 | With the same texture as in Test Example 1-8, but the shaping is difficult. |
| 1-26 | 10.0 | 2.5 | 1.0 | 4.5 | Slightly inferior to Test Example 1-8, but with a moderately elastic and fibrous texture, and thus good. |
| 1-27 | 10.0 | 10.0 | 1.0 | 3 | With a strong sensation of chewing a flat sheet, but generally acceptable. The shaping is difficult. |
| 1-28 | 2.5 | 2.5 | 1.0 | 1.0 | Almost without any sensation of chewing a konjak gel. |

As shown in Test Examples 1-8, 1-21, and 1-22, the thickness of each konjak gel ranges preferably from 0.5 to 1.5 mm. In addition, as shown in Test Examples 1-8, 1-23 to 1-25, and 1-28, the konjac gel has a long side of preferably from 7 to 20 mm. In the case of smaller than 7 mm, it is difficult to feel the gel when chewed. Also, if the long side becomes 20 mm, the shaping is difficult. As for the shape, as shown in Test Examples 1-8, 1-26, and 1-27, an elongated shape is preferable in terms of shaping and texture.

### <Test 2-1> To Examine Substrate for Shrimp-Like Food

### (Test Example 2-1) to (Test Example 2-12)

The materials, excluding water, emulsified fat or oil, an oil-soluble shrimp flavor, and sodium carbonate, that were listed in Table 7 below were used to prepare a powder mixture. Next, a liquid prepared by dispersing, in water, the emulsified fat or oil and the oil-soluble shrimp flavor was added to a food mixer. The powder mixture was then added thereto. The resulting mixture was stirred for about 1 min to be homogeneously mixed. After that, sodium carbonate was added, and the mixture was stirred for another 1 min to prepare a substrate.

Here, 6 parts by weight of the prepared substrate was added to 4 parts of the konjak gel in Test Example 1-8, and the resulting material was well mixed. After that, red yeast dye was applied to the surface of a metal mold for shrimp as shown in FIG. 14. The metal mold was filled with 5 g of the mixture per shrimp, and was steam-heated at 98°C for 10 min.

Each steam-heated shrimp-like food was cooled to provide each evaluation sample.

Test 2-1, like Test 1-1, was subject to sensory evaluation. The sensory evaluation results are shown in Table 8 below.

**[Table 7]**

| Material | Test Example 2-1 | Test Example 2-2 | Test Example 2-3 | Test Example 2-4 | Test Example 2-5 | Test Example 2-6 | Test Example 2-7 | Test Example 2-8 | Test Example 2-9 | Test Example 2-10 | Test Example 2-11 | Test Example 2-12 |
|---|---|---|---|---|---|---|---|---|---|---|---|---|
| Glucomannan | 4.0 | 3.0 | 4.5 | 4.0 | 4.0 | 4.0 | 4.0 | 4.0 | 4.0 | 4.0 | 4.0 | 4.0 |
| Distarch phosphate | 11.5 | 11.5 | 11.5 | 11.5 | 11.5 | 8.0 | 15.0 | 11.5 | 11.5 | 11.5 | 11.5 | 11.5 |
| Crystalline cellulose | 1.0 | 1.0 | 1.0 | 1.0 | 1.0 | 1.0 | 1.0 | 1.0 | 1.0 | 1.0 | 0.5 | 2.5 |
| Egg white powder | 2.0 | 2.0 | 2.0 | 2.0 | 2.0 | 2.0 | 2.0 | 1.0 | 3.0 | - | 2.0 | 2.0 |
| Isolated soy proteins | - | - | - | - | - | - | - | | - | 2.0 | - | - |
| Glycine | 1.0 | 1.0 | 1.0 | 1.0 | 1.0 | 1.0 | 1.0 | 1.0 | 1.0 | 1.0 | 1.0 | 1.0 |
| Alanine | 0.34 | 0.34 | 0.34 | 0.34 | 0.34 | 0.34 | 0.34 | 0.34 | 0.34 | 0.34 | 0.34 | 0.34 |
| Arginine | 0.07 | 0.07 | 0.07 | 0.07 | 0.07 | 0.07 | 0.07 | 0.07 | 0.07 | 0.07 | 0.07 | 0.07 |
| MSG | 0.06 | 0.06 | 0.06 | 0.06 | 0.06 | 0.06 | 0.06 | 0.06 | 0.06 | 0.06 | 0.06 | 0.06 |
| Na inosinate | 0.03 | 0.03 | 0.03 | 0.03 | 0.03 | 0.03 | 0.03 | 0.03 | 0.03 | 0.03 | 0.03 | 0.03 |
| Salt | 1.4 | 1.4 | 1.4 | 1.4 | 1.4 | 1.4 | 1.4 | 1.4 | 1.4 | 1.4 | 1.4 | 1.4 |
| Water | 76.2 | 77.2 | 75.7 | 76.4 | 76.0 | 79.7 | 72.7 | 77.2 | 75.2 | 76.2 | 76.7 | 74.7 |
| Emulsified fat or oil | 1.9 | 1.9 | 1.9 | 1.9 | 1.9 | 1.9 | 1.9 | 1.9 | 1.9 | 1.9 | 1.9 | 1.9 |
| Shrimp flavor (oil-soluble) | 0.1 | 0.1 | 0.1 | 0.1 | 0.1 | 0.1 | 0.1 | 0.1 | 0.1 | 0.1 | 0.1 | 0.1 |
| Alkaline agent (Sodium carbonate) | 0.4 | 0.4 | 0.4 | 0.2 | 0.6 | 0.4 | 0.4 | 0.4 | 0.4 | 0.4 | 0.4 | 0.4 |
| Total | 100.0 | 100.0 | 100.0 | 100.0 | 100.0 | 100.0 | 100.0 | 100.0 | 100.0 | 100.0 | 100.0 | 100.0 |
| pH | 10.0 | | | 9.5 | 10.5 | | | | | | | |

**[Table 8]**

| Test Example | Characteristics | Sensory evaluation | Comments |
|---|---|---|---|
| 2-1 | Base | 4 | With a solid content texture of substrate part, moderate elasticity, a shrimp protein-like pleasantness on the tongue, and a shrimp-like fibrous texture, and overall well-balanced. Slightly lacking in surface film-like tension, but generally good. |
| 2-2 | 3% Glucomannan | 3 | With a softer substrate part than in Test Example 2-1, and generally acceptable. |
| 2-3 | 4.5% Glucomannan | 3 | With the elasticity of substrate part being stronger than that of Test Example 2-1, too crispy, but generally acceptable. |
| 2-4 | pH 9.5 | 3 | With a softer substrate part than Test Example 2-1, and generally acceptable. |
| 2-5 | pH 10.5 | 3 | With the substrate part being a more gelatinous hard gel like konjak than in Test Example 2-1, giving a harsh taste sensation, but generally acceptable. |
| 2-6 | 8% Distarch phosphate | 3 | With the substrate part being crispier than that of Test Example 2-1, and generally acceptable. |
| 2-7 | 15% Distarch phosphate | 3 | With the substrate part being less elastic than that of Test Example 2-1, giving rice cake-like viscosity, and generally acceptable. |
| 2-8 | 1% Egg white | 3 | With the substrate part having a less protein-like pleasantness on the tongue than that of Test Example 2-1, giving a konjak-like texture and better crispiness, and generally acceptable. |
| 2-9 | 3% Egg white | 3 | With the substrate part having a stronger protein-like pleasantness on the tongue and softer than that of Test Example 2-1, and generally acceptable. |
| 2-10 | 2% Isolated soy proteins | 3.5 | Slightly softer than in Test Example 2-1, but with the substrate part giving substantially the same protein-like pleasantness on the tongue as egg white, and generally acceptable. |
| 2-11 | 0.5% Crystalline cellulose | 3 | With the substrate part having a less solid content texture than that of Test Example 2-1, giving a konjak-like texture, and generally acceptable. |
| 2-12 | 2.5% Crystalline cellulose | 3 | With the substrate part giving a more solid content texture and being softer than that of Test Example 2-1, and generally acceptable. |

Each formulation of a substrate for a shrimp-like food in the invention is listed in Test Examples 2-1 to 2-3. The amount of glucomannan added should be in the range of 3 to 4.5 wt% based on the weight of the substrate. As shown in Test Examples 2-4 and 2-5, the pH of the substrate is preferably from 9.5 to 10.5, which is lower than that of the dough for konjak gel. The amount of modified starch added should be in the range of 8 to 15 wt% based on the weight of the substrate so as to give a bodily texture of a shrimp-like food as shown in Test Examples 2-6 and 2-7. As shown in Test Examples 2-8 to 2-10, the amount of protein material added to give a shrimp-like, protein-like pleasantness on the tongue is preferably from 1 to 3 wt%. Further, the amount of crystalline cellulose added to give a insoluble solid content texture should be in the range of 0.5 to 2.5 wt%. Meanwhile, any of the shrimp-like food samples in Test Examples has a sufficient texture as a shrimp-like food. However, the surface texture and the internal texture were the same. Thus, each sample lacked a springy shrimp-like texture with a surface membrane tension.

### <Test 2-2> To Examine Texture of Shrimp Surface and Ratio Between Substrate and Konjak Gel in Shrimp-Like Food

### (Test Example 2-13)

The shrimp-like food prepared in Test Example 2-1 was microwaved at 200 W for 30 s to prepare an evaluation sample.

### (Test Example 2-14)

The shrimp-like food prepared in Test Example 2-1 was dried in hot air at 40°C for 3 min to prepare an evaluation sample.

### (Test Example 2-15)

The same procedure as in Test Example 2-13 was repeated, except that the ratio between the substrate and the konjak gel was 3:7, to prepare a shrimp-like food.

### (Test Example 2-16)

The same procedure as in Test Example 2-13 was repeated, except that the ratio between the substrate and the konjak gel was 4:6, to prepare a shrimp-like food.

### (Test Example 2-17)

The same procedure as in Test Example 2-13 was repeated, except that the ratio between the substrate and the konjak gel was 7:3, to prepare a shrimp-like food.

Test 2-2, like Test 1-1, was subject to sensory evaluation. The sensory evaluation results are shown in Table 9 below.

**[Table 9]**

| Test Example | Drying treatment | Substrate : Gel | Sensory evaluation | Comments |
|---|---|---|---|---|
| 2-1 | None | 6:4 | 4 | With a solid content texture of substrate part, moderate elasticity, a shrimp protein-like pleasantness on the tongue, and a shrimp muscle fiber-like texture, and overall well-balanced. Slightly lacking in surface film-like tension, but generally good. |
| 2-13 | Microwave | 6:4 | 5 | With more surface tension than in Test Example 2-1 and a very good texture. With the substrate and the gel being well-balanced and with a shrimp muscle fiber-like texture, and very good. |
| 2-14 | Hot-air drying | 6:4 | 4.5 | With more surface tension than in Test Example 2-1, but with a slightly stronger surface film-like texture than in Test Example 2-13. |
| 2-15 | Microwave | 3:7 | 3 | With a stronger konjak gel texture than in Test Example 2-13, but generally acceptable. |
| 2-16 | Microwave | 4:6 | 4.5 | With a somewhat stronger konjak gel texture than in Test Example 2-13, but generally good. |
| 2-17 | Microwave | 7:3 | 3 | With a less konjak gel texture sensation than in Test Example 2-13, but generally acceptable. |

As shown in Test Example 2-13 or 2-14, the surface of the shrimp-like food prepared in the heating step was dried. This drying step was provided to give the surface more tension. As a result, the texture was closer to a shrimp-like texture. As the drying procedure, the microwave was better than the hot-air drying. Then, the surface film-like texture was more natural and thus very good.

As shown in Test Examples 2-13 and 2-15 to 2-17, the results showed that the mixing ratio between the substrate and the gel ranged preferably from 7:3 to 3:7. More preferably, the range seems to be from 6:4 to 4:6.

### <Test 3-1> Examination 1 of Pulverized Konjak Gel Material for Shrimp-Like, Vacuum-Freeze-Dried Food

### (Test Example 3-1-1) to (Test Example 3-1-9)

The materials, excluding water and sodium carbonate, that were listed in Table 10 below were used to prepare a powder mixture. Next, water was put into a food mixer. The powder mixture, which had been powdered and mixed, was then added thereto. The resulting mixture was stirred for about 1 min to be homogeneously mixed. After that, sodium carbonate was added, and the mixture was stirred for another 1 min to prepare a dough for pulverized konjak gel material.

The prepared dough was put into a plastic bag. The dough was stretched with a roller to have a thickness of 1 mm. The resulting dough was steamed in a steam chamber at 98°C for 15 min, and thermally solidified.

The thermally solidified gelatinous material was put in a food processor (Panasonic MK-K48P). The material was pulverized at 2900 rpm for 3 min to prepare a pulverized gel material. In this way, a pulverized konjak gel material was prepared.

### (Test Example 3-1-10)

The same procedure as in Test Example 3-1-1 was repeated, except that the gelatinous material pulverization duration was set to 2 min, to prepare a pulverized konjak gel material.

### (Test Example 3-1-11)

The same procedure as in Test Example 3-1-1 was repeated, except that the gelatinous material pulverization duration was set to 1 min, to prepare a pulverized konjak gel material.

### (Test Example 3-1-12)

The pulverized konjak gel material pulverized in Test Example 3-1-1 was sieved with a 1-mm mesh to prepare a pulverized konjak gel material.

### (Test Example 3-1-13)

The pulverized konjak gel material pulverized in Test Example 3-1-1 was sieved with a 0.85-mm mesh to prepare a pulverized konjak gel material.

### (Test Example 3-1-14)

The pulverized konjak gel material pulverized in Test Example 3-1-1 was sieved with a 0.5-mm mesh to prepare a pulverized konjak gel material.

Table 11 below shows the results of measuring the particle size distribution, the median diameter, and the mode diameter of each pulverized konjak gel material in Test Examples 3-1-1 and 3-1-10 to 3-1-14.

**[Table 10]**

| Test Example | 3-1-1 | 3-1-2 | 3-1-3 | 3-1-4 | 3-1-5 | 3-1-6 | 3-1-7 | 3-1-8 | 3-1-9 |
|---|---|---|---|---|---|---|---|---|---|
| Glucomannan | 3.5 | 2 | 4.5 | 3.5 | 3.5 | 3.5 | 3.5 | 3.5 | 3.5 |
| Etherified tapioca distarch phosphate | 4.5 | 4.5 | 4.5 | 1 | 8 | 12 | | 4.5 | 4.5 |
| Distarch phosphate | | | | | | | 4.5 | | |
| Glycine | 0.3 | 0.3 | 0.3 | 0.3 | 0.3 | 0.3 | 0.3 | 0.3 | 0.3 |
| Alanine | 0.1 | 0.1 | 0.1 | 0.1 | 0.1 | 0.1 | 0.1 | 0.1 | 0.1 |
| Arginine | 0.02 | 0.02 | 0.02 | 0.02 | 0.02 | 0.02 | 0.02 | 0.02 | 0.02 |
| Sodium glutamate | 0.02 | 0.02 | 0.02 | 0.02 | 0.02 | 0.02 | 0.02 | 0.02 | 0.02 |
| Sodium inosinate | 0.01 | 0.01 | 0.01 | 0.01 | 0.01 | 0.01 | 0.01 | 0.01 | 0.01 |
| Salt | 0.9 | 0.9 | 0.9 | 0.9 | 0.9 | 0.9 | 0.9 | 0.9 | 0.9 |
| Water | 90.3 | 91.8 | 89.3 | 93.8 | 86.8 | 82.8 | 90.3 | 90.55 | 90.05 |
| Sodium carbonate (Alkaline agent) | 0.35 | 0.35 | 0.35 | 0.35 | 0.35 | 0.35 | 0.35 | 0.1 | 0.6 |
| Total | 100 | 100 | 100 | 100 | 100 | 100 | 100 | 100 | 100 |
| pH | 10.5 | 10.5 | 10.5 | 10.5 | 10.5 | 10.5 | 10.5 | 10.0 | 11.0 |

**[Table 11]**

| Particle size (µm) | Distribution (%) | | | | | |
|---|---|---|---|---|---|---|
| | Test Example 3-1-1 | Test Example 3-1-10 | Test Example 3-1-11 | Test Example 3-1-12 | Test Example 3-1-13 | Test Example 3-1-14 |
| 0-300 | 6.2 | 4.3 | 1.9 | 7.6 | 8.9 | 25.1 |
| 300-600 | 9.8 | 7.7 | 4.7 | 18.3 | 30.0 | 50.8 |
| 600-900 | 17.4 | 13.5 | 9.2 | 40.6 | 45.7 | 18.9 |
| 900-1200 | 20.8 | 17.6 | 12.8 | 23.4 | 12.3 | 3.9 |
| 1200-1500 | 11.9 | 11.3 | 9.4 | 5.0 | 1.8 | 0.8 |
| 1500-1800 | 19.6 | 22.8 | 24.5 | 3.9 | 1.2 | 0.5 |
| 1800-2100 | 6.3 | 8.9 | 12.7 | 0.8 | 0.0 | 0.0 |
| 2100-2400 | 4.1 | 6.6 | 11.0 | 0.4 | 0.0 | 0.0 |
| 2400-2700 | 2.5 | 4.6 | 8.4 | 0.0 | 0.0 | 0.0 |
| 2700-3000 | 1.4 | 2.9 | 5.5 | 0.0 | 0.0 | 0.0 |
| Total | 100.0 | 100.0 | 100.0 | 100.0 | 100.0 | 100.0 |
| Median diameter (µm) | 1110.8 | 1270.6 | 1539.6 | 775.1 | 652.9 | 419.9 |
| Mode diameter (µm) | 1247.0 | 1428.4 | 1649.5 | 831.6 | 720.9 | 484.0 |

### <Test 3-2> Examination 2 of Pulverized Konjak Gel Material for Shrimp-Like, Vacuum-Freeze-Dried Food

### (Test Example 3-2-1) to (Test Example 3-2-15)

The materials, excluding water, emulsified fat or oil, sesame oil, and sodium carbonate, that were listed in Table 12 below were used to prepare a powder mixture. Next, a liquid prepared by dispersing, in water, the emulsified fat or oil and the sesame oil was added to a food mixer. The powder mixture was then added thereto. The resulting mixture was stirred using the food mixer for about 1 min to be homogeneously mixed. After that, sodium carbonate was added, and the mixture was stirred for another 1 min to prepare a substrate dough.

Here, 4 parts by weight of the prepared substrate dough was added to 6 parts of the pulverized konjak gel material prepared in Test Example 3-1-1 to 3-1-14. The resulting material was well mixed to prepare a substrate. Note that in Test Example 3-2-15, no pulverized konjak gel material was added and only the substrate dough was used to prepare a substrate.

Here, 6 parts by weight of the prepared substrate was added to 4 parts of the konjak gel in Test Example 1-8, and the resulting material was well mixed. After that, red yeast dye was applied to the surface of a metal mold for shrimp as shown in FIG. 14. The metal mold was filled with 5 g of the mixture per shrimp, and was steam-heated at 98°C for 10 min.

Each steam-heated shrimp-like food was cooled, and frozen in a freezer at -40°C for about 30 min. The frozen shrimp-like food was dried in a vacuum-freeze-drying machine (TFD10LF4, manufactured by TOYOGIKEN CO., LTD.) at 0.1 torr or less until the shelf temperature reached 60°C and the product temperature reached 58°C to prepare a shrimp-like, vacuum-freeze-dried food sample.

The shrimp-like, vacuum-freeze-dried food sample prepared in Test 3-2 was put into a container, reconstituted with hot water for 3 min, and then eaten. In this way, the reconstitutability evaluation and the sensory evaluation were conducted. Five skilled panelists conducted the evaluations. The reconstitutability was graded as follows: "Excellent": fully moisture-reconstituted; "Good": moisture-reconstituted; "Fair": partially moisture-reconstituted; and "Poor": the whole core being not moisture-reconstituted. In addition, the sensory evaluation involved the texture as follows: "Excellent": a very good texture; "Good": a good texture; "Fair": a poor texture; and "Poor": a very poor texture. Further, the rate (reconstitution rate) of the post-eating weight to the pre-eating weight of each sample was measured. Table 13 below shows the evaluation results.

**[Table 12]**

| Material | Formulation amount |
|---|---|
| Glucomannan | 2.5 |
| Distarch phosphate | 2.3 |
| Crystalline cellulose | 1.1 |
| Isolated soy proteins | 1.9 |
| Trehalose | 3.8 |
| Glycine | 1.0 |
| Alanine | 0.34 |
| Arginine | 0.07 |
| MSG | 0.06 |
| Na inosinate | 0.03 |
| Salt | 0.3 |
| Water | 77.4 |
| Emulsified fat or oil | 3.8 |
| Sesame oil | 5.0 |
| Alkaline agent (Sodium carbonate) | 0.4 |
| Total | 100.0 |

**[Table 13]**

| Test Example | Pulverized konjak gel material | Reconstitutability | Texture | Reconstitution rate | Comments |
|---|---|---|---|---|---|
| 3-2-1 | 3-1-1 | Excellent | Excellent | 305.9% | Very good |
| 3-2-2 | 3-1-2 | Excellent | Good | 320.2% | With better water infiltration and a softer texture than in Test Example 3-2-1. |
| 3-2-3 | 3-1-3 | Excellent | Excellent | 310.4% | With excellent texture and reconstitutability, but difficult to prepare a pulverized konjak gel material. |
| 3-2-4 | 3-1-4 | Good | Good | 303.5% | With less water infiltration than in Test Example 3-2-1, giving a rough sensation. |
| 3-2-5 | 3-1-5 | Excellent | Good | 324.5% | With better water infiltration and slightly softer than in Test Example 3-2-1. |
| 3-2-6 | 3-1-6 | Excellent | Good | 341.2% | With better water infiltration and softer than in Test Example 3-2-1. |
| 3-2-7 | 3-1-7 | Excellent | Excellent | 307.2% | Similar to Test Example 3-2-1. |
| 3-2-8 | 3-1-8 | Excellent | Good | 327.4% | With better water infiltration than in Test Example 3-2-1 and soft. The gel is soft and difficult to be pulverized. |
| 3-2-9 | 3-1-9 | Excellent | Excellent | 311.8% | With excellent reconstitutability and texture, but giving a harsh taste sensation. |
| 3-2-10 | 3-1-10 | Excellent | Excellent | 307.3% | Similar to Test Example 3-2-1. |
| 3-2-11 | 3-1-11 | Good | Good | 307.2% | With slightly more reconstitution unevenness and texture unevenness than in Test Example 3-2-1. The mixture is difficult to shape. |
| 3-2-12 | 3-1-12 | Excellent | Excellent | 306.90% | Similar to Test Example 3-2-1. |
| 3-2-13 | 3-1-13 | Good | Good | 295.7% | With poorer water infiltration than in Test Example 3-2-1 and hard. |
| 3-2-14 | 3-1-14 | Fair | Fair | 289.4% | With slightly poor core reconstitution and hard. |
| 3-2-15 | None | Poor | Poor | 190.6% | With the core being not reconstituted. |

As shown in Test Examples 3-2-1 to 3-2-3, the amount of glucomannan added to the dough for pulverized konjak gel material had little effect on the reconstitutability. The less additive amount caused the texture to be soft. The more additive amount caused the pre-pulverization gelatinous material to be hard and be difficult to be pulverized. Preferably, the range is from 2 to 4.5 wt%.

The amount of modified starch added to the dough for pulverized konjak gel material is described in Test Examples 3-2-1 and 3-2-4 to 3-2-7. The less additive amount caused poor reconstitutability, giving the substrate a rough texture sensation. The too much additive amount caused too good reconstitution, giving a soft texture. Preferably, the additive amount is from 1 to 12 wt%. In addition, regarding the kind of modified starch, either etherified distarch phosphate or distarch phosphate was able to exert the equivalent effects.

The pH of the dough in each pulverized konjak gel material is described in Test Examples 3-2-1 and 3-2-8 to 3-2-9. If the pH is low, the pulverized gel material is soft and the texture becomes softer. The higher pH affects neither the reconstitutability nor the texture, but gives a harsh taste sensation. Preferably, the pH range is from 10 to 11.

The particle size of each pulverized konjak gel material is described in Test Examples 3-2-1 and 3-2-10 to 3-2-14. Rough pulverization causes reconstitution unevenness and texture unevenness. On the other hand, those with a large grain size may be removed to increase those with a smaller grain size. This causes poor water infiltration, giving a harder texture. It is preferable to use a pulverized konjak gel material with a distribution in the range where those with a grain size of 2700 µm or larger are present in an amount of 10 wt% or less and those with a grain size of less than 300 µm are present in an amount of 10 wt% or less. As for the particle size, it is preferable to adjust the mode diameter to be in the range from 700 to 1700 µm.

### <Test 3-3> To Examine Substrate Dough for Shrimp-like, Vacuum-Freeze-Dried Food

### (Test Example 3-3-1) to (Test Example 3-3-4)

Instead of the substrate dough for the shrimp-like vacuum-freeze dried food as prepared in Test Example 3-2-1, each substrate dough was prepared based on the corresponding formulation in Table 14 below. Then, like in Test Example 3-2-1, each shrimp-like, vacuum-freeze-dried food sample was prepared. The prepared shrimp-like, vacuum-freeze-dried food sample was evaluated, like in Test 3-2, for the reconstitutability and the texture. Table 15 below shows the evaluation results.

**[Table 14]**

| Material | Test Example 3-2-1 | Test Example 3-3-1 | Test Example 3-3-2 | Test Example 3-3-3 | Test Example 3-3-4 |
|---|---|---|---|---|---|
| Glucomannan | 2.5 | 1.5 | 4.0 | 2.5 | 2.5 |
| Distarch phosphate | 2.3 | 2.3 | 2.3 | 2.3 | 2.3 |
| Crystalline cellulose | 1.1 | 1.1 | 1.1 | 1.1 | 1.1 |
| Isolated soy proteins | 1.9 | 1.9 | 1.9 | 1.9 | 1.9 |
| Trehalose | 3.8 | 3.8 | 3.8 | 3.8 | 3.8 |
| Glycine | 1.0 | 1.0 | 1.0 | 1.0 | 1.0 |
| Alanine | 0.34 | 0.34 | 0.34 | 0.34 | 0.34 |
| Arginine | 0.07 | 0.07 | 0.07 | 0.07 | 0.07 |
| MSG | 0.06 | 0.06 | 0.06 | 0.06 | 0.06 |
| Na inosinate | 0.03 | 0.03 | 0.03 | 0.03 | 0.03 |
| Salt | 0.3 | 0.3 | 0.3 | 0.3 | 0.3 |
| Water | 77.4 | 78.4 | 75.9 | 77.7 | 77.2 |
| Emulsified fat or oil | 3.8 | 3.8 | 3.8 | 3.8 | 3.8 |
| Sesame oil | 5.0 | 5.0 | 5.0 | 5.0 | 5.0 |
| Alkaline agent (Sodium carbonate) | 0.4 | 0.4 | 0.4 | 0.1 | 0.6 |
| Total | 100.0 | 100.0 | 100.0 | 100.0 | 100.0 |
| pH | 10.0 | 10.0 | 10.0 | 9.5 | 10.5 |

**[Table 15]**

| Test Example | Glucomannan | pH | Reconstitutability | Texture | Reconstitution rate | Comments |
|---|---|---|---|---|---|---|
| 3-2-1 | 2.5% | 10 | Excellent | Excellent | 305.9% | Very good |
| 3-3-1 | 1.5% | 10 | Excellent | Good | 308.2% | With excellent reconstitutability, but slightly softer than in Test Example 3-2-1. |
| 3-3-2 | 4.0% | 10 | Excellent | Good | 304.3% | With excellent reconstitutability, but slightly harder than in Test Example 3-2-1. |
| 3-3-3 | 2.5% | 9.5 | Excellent | Good | 310.4% | With excellent reconstitutability, but slightly softer than in Test Example 3-2-1. |
| 3-3-4 | 2.5% | 10.5 | Excellent | Good | 307.4% | With excellent reconstitutability, but slightly harder than in Test Example 3-2-1. |

The results of Test 3-3 showed that the substrate dough for shrimp-like, vacuum-freeze-dried food had some effect on the texture, but little effect on reconstitutability. The amount of glucomannan added to the substrate dough for shrimp-like vacuum-freeze dried food is preferably from 1.5 to 4 wt%. The pH of the substrate dough for shrimp-like vacuum-freeze dried food is preferably from 9.5 to 10.5.

### <Test 3-4> To Examine Ratio between Substrate Dough and Pulverized Konjak Gel Material for Shrimp-Like, Vacuum-Freeze-Dried Food

### (Test Example 3-4-1) to (Test Example 3-4-5)

Used was each substrate obtained by mixing, at each ratio designated in Table 16 below, the substrate dough for shrimp-like, vacuum-freeze-dried food as prepared in Test Example 3-2-1 and the pulverized Konjak material prepared in Test Example 3-1-1. Then, according to the procedure in Test Example 3-2-1, each shrimp-like, vacuum-freeze-dried food was prepared. Like Test 3-2, the reconstitution and the texture were evaluated, and the reconstitution rate was measured. The evaluation results and the measured results are together shown in Table 16 below.

**[Table 16]**

| Test Example | Substrate dough | Pulverized gel material | Reconstitutability | Texture | Reconstitution rate | Comments |
|---|---|---|---|---|---|---|
| 3-2-1 | 40% | 60% | Excellent | Excellent | 305.9% | Very good |
| 3-4-1 | 90% | 10% | Good | Good | 293.0% | With slightly less water infiltration than in Test Example 3-2-1, and hard |
| 3-4-2 | 80% | 20% | Excellent | Good | 299.1% | With substantially the same water infiltration as in Test Example 3-2-1, but slightly hard. |
| 3-4-3 | 60% | 40% | Excellent | Excellent | 304.0% | With a stuffier dough texture than in Test Example 3-2-1, but very good. |
| 3-4-4 | 20% | 80% | Excellent | Excellent | 309.3% | With excellent reconstitutability and a somewhat softer texture than in Test Example 3-2-1, and very good. However, the shaping is difficult. |
| 3-4-5 | 10% | 90% | Excellent | Good | 311.3% | With excellent reconstitutability and a softer texture than in Test Example 3-2-1. The shaping is very difficult. |

As shown in Test 3-4, the less the formulation amount in the substrate for pulverized konjak gel material, the poorer the reconstitutability and the harder the texture. As the formulation amount increased, the texture was softer and the shaping was more difficult. The amount of pulverized konjak gel material added to the substrate is preferably from 10 to 80 wt% in the substrate.

### <Test 3-5> To Examine Ratio between Substrate and Konjak Gel for Shrimp-Like, Vacuum-Freeze-Dried Food

### (Test Example 3-5-1)

The same procedure as in Test Example 3-2-1 was repeated, except that the ratio between the substrate and the konjak gel was set to 3:7, to prepare a shrimp-like, vacuum-freeze-dried food sample.

### (Test Example 3-5-2)

The same procedure as in Test Example 3-2-1 was repeated, except that the ratio between the substrate and the konjak gel was set to 4:6, to prepare a shrimp-like, vacuum-freeze-dried food sample.

### (Test Example 3-5-3)

The same procedure as in Test Example 3-2-1 was repeated, except that the ratio between the substrate and the konjak gel was set to 7:3, to prepare a shrimp-like, vacuum-freeze-dried food sample.

Test 3-5, like Test 3-2, was subject to reconstitutability and sensory evaluations. Table 17 below shows the evaluation results.

**[Table 17]**

| Test Example | Substrate : Gel | Reconstitutability | Sensory evaluation | Reconstitution rate | Comments |
|---|---|---|---|---|---|
| 3-2-1 | 6:4 | Excellent | Excellent | 305.9% | Very good |
| 3-5-1 | 3:7 | Good | Good | 301.1% | With slightly poorer infiltration and a stronger konjak gel texture than in Test Example 3-2-1, but generally good. |
| 3-5-2 | 4:6 | Excellent | Excellent | 304.5% | Fully reconstituted and very good. Regarding the sensation, with a slightly stronger konjak gel texture than in Test Example 3-2-1, but very good. |
| 3-5-3 | 7:3 | Excellent | Good | 308.8% | Fully reconstituted and very good, but with a weaker and softer konjak gel texture than in Test Example 3-2-1. |

As shown in Test Example 3-5, the results showed that the mixing ratio between the substrate and the gel ranged preferably from 7:3 to 3:7. More preferably, the range seems to be from 6:4 to 4:6.

### <Test 4-1> To Examine Another Embodiment of Substrate for Shrimp-like, Vacuum-Freeze-Dried Food

### (Test Example 4-1-1) to (Test Example 4-1-14)

The materials, excluding water, emulsified fat or oil, sesame oil, and sodium carbonate, that were listed in Table 18 below were used to prepare a powder mixture. Next, a liquid prepared by dispersing, in water, the emulsified fat or oil and the sesame oil was added. The resulting mixture was stirred using a food mixer for about 1 min to be homogeneously mixed. After that, sodium carbonate was added, and the mixture was stirred for another 1 min to prepare a substrate.

Baking powder No. 77 of Akadazen Co., Ltd. was used as the puffing agent in Test Examples 4-1-2 to 4-1-4. The puffing agent in Test Examples 4-1-5 to 4-1-7 was sodium bicarbonate (sodium bicarbonate). The foaming emulsifier used in Test Examples 4-1-8 to 4-1-10 was Pure-Up (R) 100 from Riken Vitamin Co., Ltd.

Here, 6 parts by weight of the prepared substrate was added to 4 parts of the konjak gel in Test Example 1-8, and the resulting material was well mixed. After that, red yeast dye was applied to the surface of a metal mold for shrimp as shown in FIG. 14. The metal mold was filled with 5 g of the mixture per shrimp, and was steam-heated at 98°C for 10 min.

Each steam-heated shrimp-like food was cooled, and frozen in a freezer at -40°C for about 30 min. The frozen shrimp-like food was dried in a vacuum-freeze-drying machine (TFD10LF4, manufactured by TOYOGIKEN CO., LTD.) at 0.1 torr or less until the shelf temperature reached 60°C and the product temperature reached 58°C to prepare a shrimp-like, vacuum-freeze-dried food sample.

Each sample prepared in Test 4-1 was placed in a container, and reconstituted with hot water for 3 min, and eaten. In this way, the reconstitutability evaluation and the sensory evaluation were conducted. Five skilled panelists conducted the evaluations. The reconstitutability was graded as follows: "Excellent": fully moisture-reconstituted; "Good": moisture-reconstituted; "Fair": partially moisture-reconstituted; and "Poor": the whole core being not moisture-reconstituted. In addition, the sensory evaluation involved the texture and the flavor as follows: "Excellent": a very good texture; "Good": a good texture; "Fair": a poor texture; and "Poor": a very poor texture. Further, the rate (reconstitution rate) of the post-eating weight to the pre-eating weight of each sample was measured. The evaluation results and the measured results are shown in Table 19 below.

**[Table 18]**

| Material | Test Example 4-1-1 | Test Example 4-1-2 | Test Example 4-1-3 | Test Example 4-1-4 | Test Example 4-1-5 | Test Example 4-1-6 | Test Example 4-1-7 | Test Example 4-1-8 | Test Example 4-1-9 | Test Example 4-1-10 | Test Example 4-1-11 | Test Example 4-1-12 | Test Example 4-1-13 | Test Example 4-1-14 |
|---|---|---|---|---|---|---|---|---|---|---|---|---|---|---|
| Glucomannan | 2.5 | 2.5 | 2.5 | 2.5 | 2.5 | 2.5 | 2.5 | 2.5 | 2.5 | 2.5 | 1.5 | 4.0 | 2.5 | 2.5 |
| Distarch phosphate | 2.3 | 2.3 | 2.3 | 2.3 | 2.3 | 2.3 | 2.3 | 2.3 | 2.3 | 2.3 | 2.3 | 2.3 | 2.3 | 2.3 |
| Crystalline cellulose | 1.1 | 1.1 | 1.1 | 1.1 | 1.1 | 1.1 | 1.1 | 1.1 | 1.1 | 1.1 | 1.1 | 1.1 | 1.1 | 1.1 |
| Isolated soy proteins | 1.9 | 1.9 | 1.9 | 1.9 | 1.9 | 1.9 | 1.9 | 1.9 | 1.9 | 1.9 | 1.9 | 1.9 | 1.9 | 1.9 |
| Trehalose | 3.8 | 3.8 | 3.8 | 3.8 | 3.8 | 3.8 | 3.8 | 3.8 | 3.8 | 3.8 | 3.8 | 3.8 | 3.8 | 3.8 |
| Glycine | 1.0 | 1.0 | 1.0 | 1.0 | 1.0 | 1.0 | 1.0 | 1.0 | 1.0 | 1.0 | 1.0 | 1.0 | 1.0 | 1.0 |
| Alanine | 0.34 | 0.34 | 0.34 | 0.34 | 0.34 | 0.34 | 0.34 | 0.34 | 0.34 | 0.34 | 0.34 | 0.34 | 0.34 | 0.34 |
| Arginine | 0.07 | 0.07 | 0.07 | 0.07 | 0.07 | 0.07 | 0.07 | 0.07 | 0.07 | 0.07 | 0.07 | 0.07 | 0.07 | 0.07 |
| MSG | 0.06 | 0.06 | 0.06 | 0.06 | 0.06 | 0.06 | 0.06 | 0.06 | 0.06 | 0.06 | 0.06 | 0.06 | 0.06 | 0.06 |
| Na inosinate | 0.03 | 0.03 | 0.03 | 0.03 | 0.03 | 0.03 | 0.03 | 0.03 | 0.03 | 0.03 | 0.03 | 0.03 | 0.03 | 0.03 |
| Salt | 0.3 | 0.3 | 0.3 | 0.3 | 0.3 | 0.3 | 0.3 | 0.3 | 0.3 | 0.3 | 0.3 | 0.3 | 0.3 | 0.3 |
| Puffing agent | | 3.0 | 6.0 | 9.0 | 1.0 | 2.0 | 3.0 | | | | 6.0 | 6.0 | 6.0 | 6.0 |
| Foaming emulsifier | | | | | | | | 1.0 | 2.0 | 3.0 | | | | |
| Water | 77.4 | 74.4 | 71.4 | 68.4 | 76.4 | 75.4 | 74.4 | 76.4 | 75.4 | 74.4 | 72.4 | 69.9 | 71.7 | 71.2 |
| Emulsified fat or oil | 3.8 | 3.8 | 3.8 | 3.8 | 3.8 | 3.8 | 3.8 | 3.8 | 3.8 | 3.8 | 3.8 | 3.8 | 3.8 | 3.8 |
| Sesame oil | 5.0 | 5.0 | 5.0 | 5.0 | 5.0 | 5.0 | 5.0 | 5.0 | 5.0 | 5.0 | 5.0 | 5.0 | 5.0 | 5.0 |
| Alkaline agent (Sodium carbonate) | 0.4 | 0.4 | 0.4 | 0.4 | 0.4 | 0.4 | 0.4 | 0.4 | 0.4 | 0.4 | 0.4 | 0.4 | 0.1 | 0.6 |
| Total | 100.0 | 100.0 | 100.0 | 100.0 | 100.0 | 100.0 | 100.0 | 100.0 | 100.0 | 100.0 | 100.0 | 100.0 | 100.0 | 100.0 |
| Sodium bicarbonate amount. | 0.0 | 1.0 | 2.0 | 3.0 | 1.0 | 2.0 | 3.0 | | | | 2.0 | 2.0 | 2.0 | 2.0 |
| pH | 10.0 | 10.0 | 10.0 | 10.0 | 10.0 | 10.0 | 10.0 | 10.0 | 10.0 | 10.0 | 10.0 | 10.0 | 9.5 | 10.5 |

**[Table 19]**

| Test Example | Characteristics | Reconstitutability | Sensory evaluation | Reconstitution rate | Comments |
|---|---|---|---|---|---|
| 4-1-1 | Neither puffing agent nor emulsifier | Poor | Poor | 190.6% | With poor reconstitutability, and hard. |
| 4-1-2 | Puffing agent (1% sodium bicarbonate) | Good | Good | 196.2% | Reconstituted and slightly hard, but with a good texture. |
| 4-1-3 | Puffing agent (2% sodium bicarbonate) | Excellent | Excellent | 204.3% | Fully reconstituted with a very good texture. |
| 4-1-4 | Puffing agent (3% sodium bicarbonate) | Excellent | Good | 215.0% | Fully reconstituted, but slightly softer than in Example 4-1-3, giving a sour taste sensation. |
| 4-1-5 | 1% Sodium bicarbonate | Good | Good | 196.9% | Reconstituted and slightly hard, but with a good texture. |
| 4-1-6 | 2% Sodium bicarbonate | Excellent | Excellent | 200.4% | Fully reconstituted with a very good texture. |
| 4-1-7 | 3% Sodium bicarbonate | Excellent | Good | 206.8% | Fully reconstituted, but slightly softer than in Example 4-1-6, giving a bitter taste sensation. |
| 4-1-8 | 1% Foaming emulsifier | Good | Good | 192.7% | Reconstituted and slightly hard, but with a good texture. |
| 4-1-9 | 2% Foaming emulsifier | Excellent | Excellent | 204.2% | Fully reconstituted with a very good texture. |
| 4-1-10 | 3% Foaming emulsifier | Excellent | Good | 215.5% | Fully reconstituted, but slightly softer than in Example 4-1-9. |
| 4-1-11 | 1.5% Glucomannan | Excellent | Good | 216.2% | Well reconstituted, but slightly softer than in Test Example 4-1-3. |
| 4-1-12 | 4% Glucomannan | Good | Good | 203.5% | Reconstituted, but slightly harder than in Test Example 4-1-3. |
| 4-1-13 | pH 9.5 | Excellent | Good | 227.5% | Well reconstituted, but slightly softer than in Test Example 4-1-3. |
| 4-1-14 | pH 10.5 | Good | Good | 209.9% | Reconstituted, but giving a slightly harsher taste than in Test Example 4-1-3. |

As shown in Test Examples 4-1-1 to 4-1-14, the substrate for shrimp-like, vacuum-freeze-dried food in the invention preferably contains, in addition to glucomannan and an alkaline agent, 1 to 3 wt% of sodium bicarbonate as a puffing agent or 1 to 3 wt% of foaming emulsifier. In addition, 1.5 to 4 wt% of glucomannan is preferably contained in the substrate. The alkaline agent should be added at such an amount that the pH of the substrate becomes 9.5 to 10.5.

### <Test 4-2> To Examine Ratio between Substrate and Konjak Gel for Shrimp-Like, Vacuum-Freeze-Dried Food

### (Test Example 4-2-1)

The same procedure as in Test Example 4-1-3 was repeated, except that the ratio between the substrate and the konjak gel was set to 3:7, to prepare a shrimp-like, vacuum-freeze-dried food.

### (Test Example 4-2-2)

The same procedure as in Test Example 4-1-3 was repeated, except that the ratio between the substrate and the konjak gel was set to 4:6, to prepare a shrimp-like, vacuum-freeze-dried food.

### (Test Example 4-2-3)

The same procedure as in Test Example 4-1-3 was repeated, except that the ratio between the substrate and the konjak gel was set to 7:3, to prepare a shrimp-like, vacuum-freeze-dried food.

Test 4-2, like Test 4-1, was subject to reconstitutability and sensory evaluations. The evaluation results and the measured results are shown in Table 20 below.

**[Table 20]**

| Test Example | Substrate : Gel | Reconstitutability | Sensory evaluation | Reconstitution rate | Comments |
|---|---|---|---|---|---|
| 4-1-3 | 6:4 | Excellent | Excellent | 204.3% | Fully reconstituted with a very good texture. |
| 4-2-1 | 3:7 | Good | Good | 201.2% | With poorer infiltration and a stronger konjak gel texture than in Test Example 4-1-3, but generally good. |
| 4-2-2 | 4:6 | Excellent | Excellent | 203.8% | Fully reconstituted and very good. Regarding the sensation, with a slightly stronger konjak gel texture than in Test Example 4-1-3, but very good. |
| 4-2-3 | 7:3 | Excellent | Good | 210.4% | Fully reconstituted and very good, but with a weaker and softer konjak gel texture than in Test Example 4-1-3. |

As shown in Test Examples 4-1-3 and 4-2-1 to 4-2-3, the results showed that the mixing ratio between the substrate and the gel ranged preferably from 7:3 to 3:7. More preferably, the range seems to be from 6:4 to 4:6.

## Claims

1. A konjak gel comprising the following features (A) to (G):
(A) a glucomannan content of 3.5 to 12 wt%;
(B) a moisture content of 70 to 90 wt%;
(C) a gel long side of 7 to 20 mm, wherein the gel long side is the longest length of the konjak gel;
(D) a gel thickness of 0.5 to 1.5 mm, wherein the gel thickness is the shortest length of the konjak gel;
(E) a porosity of 9 to 17% as measured for pores of 100 µm² or larger in a gel cross-section, wherein the porosity is the ratio of the total area of the pores to the area of the cross section when the cross section of the gel is observed under an electron microscope;
(F) a largest pore porosity of 3 to 6% in the gel cross-section, wherein the largest pore porosity is the ratio of the area of the largest pore to the area of the cross-section of the gel; and
(G) the gel having undergone freeze denaturation.

2. The konjak gel according to claim 1, further comprising the following feature (H):
(H) a content of modified starch of 4.5 to 18 wt%.

3. A method for producing a konjak gel according to claim 1 or 2, comprising:
a dough preparation step of mixing glucomannan in an amount of 2.5 to 4 wt% based on a weight of a dough, an alkaline agent, and water to prepare the dough with a pH of 10 to 11;
a shaping step of shaping the prepared dough;
a steaming step of steaming the shaped dough to prepare a gelatinous material;
a freezing step of freezing the prepared gelatinous material;
a shredding step of shredding the frozen gelatinous material into pieces with a long side of 7 to 20 mm and a thickness of 0.5 to 1.5 mm; and
a porous body formation step of subjecting each shredded gelatinous material to microwave or drying under reduced pressure to make porous the material with a moisture of 70 to 90 wt%, a porosity of 9 to 17% as measured for pores of 100 µm² or larger in a gel cross section, and a largest pore porosity of 3 to 6%.

4. The method for producing a konjak gel according to claim 3, wherein 3.5 to 8 wt% of modified starch based on the weight of the dough is added in the dough preparation step.

5. A method for producing a shrimp-like food containing a konjak gel according to claim 1 or 2, and a substrate, the method comprising:
a konjak gel preparation step of mixing 2.5 to 4 wt% of glucomannan based on an weight of a dough, an alkaline agent, and water to prepare the dough with a pH of 10 to 11, and then shaping and steaming the dough for gelation, freezing and shredding the gelatinous dough with a long side of 7 to 20 mm and a thickness of 0.5 to 1.5 mm in size, and then subjecting the resulting material to microwave or drying under reduced pressure to prepare a porous konjak gel having a moisture of 70 to 90 wt%, a porosity of 9 to 17% as measured for pores of 100 µm² or larger in a gel cross section, and a largest pore porosity of 3 to 6%;
a substrate preparation step of mixing, based on a weight of a substrate, 3 to 4.5 wt% of glucomannan, 1 to 3 wt% of protein material, 8 to 15 wt% of modified starch, an alkali agent, and water to prepare the substrate with a pH of 9.5 to 10.5;
a mixing step of mixing the substrate and the konjak gel at a ratio of 3:7 to 7:3 to prepare a mixture;
a shaping step of shaping the mixture to prepare a shaped material; and
a heating step of steaming the shaped material to be thermally solidified.

6. The method for producing the shrimp-like food according to claim 5, further comprising, after the heating step, a drying step of drying a surface of the thermally solidified, shaped material.

7. A method for producing a shrimp-like, vacuum-freeze-dried food containing a konjak gel according to claim 1 or 2, and a substrate containing a pulverized konjak gel material, the method comprising:
a konjak gel preparation step of mixing 2.5 to 4 wt% of glucomannan based on an weight of a dough for the konjak gel, an alkaline agent, and water to prepare the konjak gel dough with a pH of 10 to 11, and then shaping and steaming the konjak gel dough for gelation, freezing and shredding the gelatinous konjak gel dough with a long side of 7 to 20 mm and a thickness of 0.5 to 1.5 mm in size, and then subjecting the resulting material to microwave or drying under reduced pressure to prepare a porous konjak gel having a moisture of 70 to 90 wt%, a porosity of 9 to 17% as measured for pores of 100 µm² or larger in a gel cross section, and a largest pore porosity of 3 to 6%;
a pulverized konjak gel material preparation step of mixing, based on an weight of a dough for a pulverized konjak gel material, 2 to 4.5 wt% of glucomannan, 1 to 12 wt% of modified starch, an alkaline, and water to prepare the pulverized konjak gel material dough with a pH of 10 to 11, shaping and steaming the pulverized konjak gel material dough for gelation, and pulverizing the dough to prepare the pulverized konjak gel material;
a substrate preparation step of mixing, based on a weight of a dough for a substrate, 1.5 to 4 wt% of glucomannan, an alkali agent, and water, further mixing the substrate dough prepared at a pH of 10 to 11 and the pulverized konjak gel material, so that the substrate contains 10 to 80 wt% of the pulverized konjak gel material, to prepare the substrate containing the pulverized konjak gel material;
a mixture preparation step of mixing the konjak gel and the substrate at a ratio of 3:7 to 7:3 to prepare a mixture;
a shaping step of shaping the mixture to prepare a shaped material;
a heating step of heating the shaped material shaped in the shaping step to be thermally solidified; and
a vacuum-freeze-drying step of freezing the thermally solidified shaped material to be vacuum-freeze-dried.

8. A method for producing a shrimp-like, vacuum-freeze-dried food containing a konjak gel according to claim 1 or 2, and a substrate, the method comprising:
a konjak gel preparation step of mixing 2.5 to 4 wt% of glucomannan based on an weight of a dough for the konjak gel, an alkaline agent, and water to prepare the konjak gel dough with a pH of 10 to 11, and then shaping and steaming the konjak gel dough for gelation, freezing and shredding the gelatinous konjak gel dough with a long side of 7 to 20 mm and a thickness of 0.5 to 1.5 mm in size, and then subjecting the resulting material to microwave or drying under reduced pressure to prepare a porous konjak gel having a moisture of 70 to 90 wt%, a porosity of 9 to 17% as measured for pores of 100 µm² or larger in a gel cross section, and a largest pore porosity of 3 to 6%;
a substrate preparation step of mixing, based on a weight of a substrate, 1.5 to 4 wt% of glucomannan, 0.1 to 0.6 wt% of an alkali agent, 1 to 3 wt% of sodium bicarbonate or 1 to 3 wt% of a foaming emulsifier, and water to prepare the substrate;
a mixture preparation step of mixing the konjak gel and the substrate at a ratio of 3:7 to 7:3 to prepare a mixture;
a shaping step of shaping the mixture to prepare a shaped material;
a heating step of heating the shaped material shaped in the shaping step to be thermally solidified; and
a vacuum-freeze-drying step of freezing the thermally solidified shaped material to be vacuum-freeze-dried.

## Patentansprüche

1. Konjakgel, umfassend die folgenden Merkmale (A) bis (G):
(A) einen Glucomannan-Gehalt von 3,5 bis 12 Gew.-%;
(B) einen Feuchtigkeitsgehalt von 70 bis 90 Gew.-%;
(C) eine Gel-Langseite von 7 bis 20 mm, wobei die Gel-Langseite die längste Länge des Konjakgels ist;
(D) eine Geldicke von 0,5 bis 1,5 mm, wobei die Geldicke die kürzeste Länge des Konjakgels ist;
(E) eine Porosität von 9 bis 17 %, wie für Poren mit 100 µm² oder größer in einem Gelquerschnitt gemessen, wobei die Porosität das Verhältnis der Gesamtfläche der Poren zur Fläche des Querschnitts ist, wenn der Querschnitt des Gels unter einem Elektronenmikroskop betrachtet wird;
(F) eine größte Porenporosität von 3 bis 6 % in dem Gelquerschnitt, wobei die größte Porenporosität das Verhältnis der Fläche der größten Pore zur Fläche des Querschnitts des Gels ist; und
(G) das Gel wurde einer Gefrierdenaturierung unterzogen.

2. Konjakgel nach Anspruch 1, das weiters das folgende Merkmal (H) umfasst:
(H) einen Gehalt an modifizierter Stärke von 4,5 bis 18 Gew.-%.

3. Verfahren zur Herstellung eines Konjakgels nach Anspruch 1 oder 2, umfassend:
einen Teigherstellungsschritt des Vermischens von Glucomannan in einer Menge von 2,5 bis 4 Gew.-%, bezogen auf ein Gewicht eines Teigs, einem alkalischen Mittel und Wasser, um den Teig mit einem pH-Wert von 10 bis 11 herzustellen;
einen Formschritt des Formens des hergestellten Teigs;
einen Dämpfschritt des Dämpfens des geformten Teigs, um ein gallertartiges Material herzustellen;
einen Einfrierschritt des Einfrierens des hergestellten gallertartigen Materials;
einen Zerkleinerungsschritt des Zerkleinerns des gefrorenen gallertartigen Materials in Stücke mit einer langen Seite von 7 bis 20 mm und einer Dicke von 0,5 bis 1,5 mm; und
einen Bildungsschritt eines porösen Körpers durch Aussetzen jedes zerkleinerten gallertartigen Materials gegenüber Mikrowellen oder einer Trocknung unter reduziertem Druck, um das Material porös zu gestalten mit einer Feuchtigkeit von 70 bis 90 Gew.-%, einer Porosität von 9 bis 17 %, wie für Poren mit 100 µm² oder größer in einem Gelquerschnitt gemessen, und einer größten Porenporosität von 3 bis 6 %.

4. Verfahren zur Herstellung eines Konjakgels nach Anspruch 3, wobei 3,5 bis 8 Gew.-% modifizierte Stärke, bezogen auf das Gewicht des Teigs, in dem Teigherstellungsschritt zugesetzt werden.

5. Verfahren zur Herstellung eines Garnelen-ähnlichen Lebensmittels, das ein Konjakgel nach Anspruch 1 oder 2 enthält, und eines Substrats, wobei das Verfahren Folgendes umfasst:
einen Konjakgelherstellungsschritt des Vermischens von 2,5 bis 4 Gew.-% Glucomannan, bezogen auf ein Gewicht eines Teigs, einem alkalischen Mittel und Wasser, um den Teig mit einem pH-Wert von 10 bis 11 herzustellen, und dann Formen und Dämpfen des Teigs zur Gelierung, Einfrieren und Zerkleinern des gallertartigen Teigs auf eine Größe von einer langen Seite von 7 bis 20 mm und einer Dicke von 0,5 bis 1,5 mm und dann Aussetzen des resultierenden Materials gegenüber Mikrowellen oder einer Trocknung unter reduziertem Druck, um ein poröses Konjakgel mit einer Feuchtigkeit von 70 bis 90 Gew.-%, einer Porosität von 9 bis 17 %, wie für Poren mit 100 µm² oder größer in einem Gelquerschnitt gemessen, und einer größten Porenporosität von 3 bis 6 % herzustellen;
einen Substratherstellungsschritt des Vermischens, bezogen auf ein Gewicht eines Substrats, von 3 bis 4,5 Gew.-% Glucomannan, 1 bis 3 Gew.-% Proteinmaterial, 8 bis 15 Gew.-% modifizierter Stärke, einem alkalischen Mittel und Wasser, um das Substrat mit einem pH-Wert von 9,5 bis 10,5 herzustellen;
einen Mischschritt des Vermischens des Substrats und des Konjakgels in einem Verhältnis von 3:7 bis 7:3, um ein Gemisch herzustellen;
einen Formschritt des Formens des Gemischs, um ein geformtes Material herzustellen; und
einen Erhitzungsschritt des Dämpfens des geformten Materials, um durch Hitze verfestigt zu werden.

6. Verfahren zur Herstellung eines Garnelen-ähnlichen Lebensmittels nach Anspruch 5, das weiters nach dem Erhitzungsschritt einen Trocknungsschritt des Trocknens einer Oberfläche des durch Hitze verfestigten, geformten Materials umfasst.

7. Verfahren zur Herstellung eines Garnelen-ähnlichen, im Vakuum gefriergetrockneten Lebensmittels, das ein Konjakgel nach Anspruch 1 oder 2 enthält, und eines Substrats, das ein pulverisiertes Konjakgelmaterial enthält, wobei das Verfahren Folgendes umfasst:
einen Konjakgelherstellungsschritt des Vermischens von 2,5 bis 4 Gew.-% Glucomannan, bezogen auf ein Gewicht eines Teigs für das Konjakgel, einem alkalischen Mittel und Wasser, um den Konjakgelteig mit einem pH-Wert von 10 bis 11 herzustellen, und dann Formen und Dämpfen des Konjakgelteigs zur Gelierung, Einfrieren und Pulverisieren des gallertartigen Konjakgelteigs mit einer langen Seite von 7 bis 20 mm und einer Dicke von 0,5 bis 1,5 mm und dann Aussetzen des resultierenden Materials gegenüber Mikrowellen oder einer Trocknung unter reduziertem Druck, um ein poröses Konjakgel mit einer Feuchtigkeit von 70 bis 90 Gew.-%, einer Porosität von 9 bis 17 %, wie für Poren mit 100 µm² oder größer in einem Gelquerschnitt gemessen, und einer Porosität der größten Pore von 3 bis 6 % herzustellen;
einen Herstellungsschritt eines pulverisierten Konjakgelmaterials durch Vermischen, bezogen auf ein Gewicht eines Teigs für ein pulverisiertes Konjakgelmaterial, von 2 bis 4,5 Gew.-% Glucomannan, 1 bis 12 Gew.-% modifizierter Stärke, einem alkalischen Mittel und Wasser, um den pulverisierten Konjakgelmaterialteig mit einem pH-Wert von 10 bis 11 herzustellen, Formen und Dämpfen des pulverisierten Konjakgelmaterialteigs zur Gelierung und Pulverisieren des Teigs, um das pulverisierte Konjakgelmaterial herzustellen;
einen Substratherstellungsschritt des Vermischens, bezogen auf ein Gewicht eines Teigs, von 1,5 bis 4 Gew.-% Glucomannan, einem alkalischen Mittel und Wasser, weiters das Vermischen des Substratteigs, der bei einem pH-Wert von 10 bis 11 hergestellt wurde, und des pulverisierten Konjakgelmaterials, sodass das Substrat 10 bis 80 Gew.-% des pulverisierten Konjakgelmaterials enthält, um das Substrat, das das pulverisierte Konjakgelmaterial enthält, herzustellen;
einen Mischschritt des Vermischens des Konjakgels und des Substrats in einem Verhältnis von 3:7 bis 7:3, um ein Gemisch herzustellen;
einen Formschritt des Formens des Gemischs, um ein geformtes Material herzustellen;
einen Erhitzungsschritt des Erhitzens des geformten Materials, das in dem Formschritt geformt wurde, um durch Hitze verfestigt zu werden; und
einen Gefriertrocknungsschritt im Vakuum des Einfrierens des durch Hitze verfestigten geformten Materials, damit dieses im Vakuum gefriergetrocknet wird.

8. Verfahren zur Herstellung eines Garnelen-ähnlichen, im Vakuum gefriergetrockneten Lebensmittels, das ein Konjakgel nach Anspruch 1 oder 2 enthält, und eines Substrats, wobei das Verfahren Folgendes umfasst:
einen Konjakgelherstellungsschritt des Vermischens von 2,5 bis 4 Gew.-% Glucomannan, bezogen auf ein Gewicht eines Teigs für das Konjakgel, einem alkalischen Mittel und Wasser, um den Konjakgelteig mit einem pH-Wert von 10 bis 11 herzustellen, und dann Formen und Dämpfen des Konjakgelteigs zur Gelierung, Einfrieren und Zerkleinern des gallertartigen Konjakgelteigs auf eine Größe von einer langen Seite von 7 bis 20 mm und einer Dicke von 0,5 bis 1,5 mm und dann Aussetzen des resultierenden Materials gegenüber Mikrowellen oder einer Trocknung unter reduziertem Druck, um ein poröses Konjakgel mit einer Feuchtigkeit von 70 bis 90 Gew.-%, einer Porosität von 9 bis 17 %, wie für Poren mit 100 µm² oder größer in einem Gelquerschnitt gemessen, und einer größten Porenporosität von 3 bis 6 % herzustellen;
einen Substratherstellungsschritt des Vermischens, bezogen auf ein Gewicht eines Substrats, von 1,5 bis 4 Gew.-% Glucomannan, 0,1 bis 0,6 Gew.-% eines alkalischen Mittels, 1 bis 3 Gew.-% Natriumbicarbonat oder 1 bis 3 Gew.-% eines schäumenden Emulgators und Wasser, um das Substrat herzustellen;
einen Mischschritt des Vermischens des Konjakgels und des Substrats in einem Verhältnis von 3:7 bis 7:3, um ein Gemisch herzustellen;
einen Formschritt des Formens des Gemischs, um ein geformtes Material herzustellen;
einen Erhitzungsschritt des Erhitzens des geformten Materials, das in dem Formschritt geformt wurde, um durch Hitze verfestigt zu werden; und
einen Gefriertrocknungsschritt im Vakuum des Einfrierens des durch Hitze verfestigten geformten Materials, damit dieses im Vakuum gefriergetrocknet wird.

## Revendications

1. Gel de konjak, comprenant les caractéristiques (A) à (G) suivantes :
(A) une teneur en glucomannane de 3,5 à 12 % en poids ;
(B) une teneur en humidité de 70 à 90 % en poids ;
(C) un côté long de gel de 7 à 20 mm, dans lequel le côté long de gel est la longueur la plus grande du gel de konjak ;
(D) une épaisseur de gel de 0,5 à 1,5 mm, dans lequel l'épaisseur de gel est la longueur la plus courte du gel de konjak ;
(E) une porosité de 9 à 17 % telle que mesurée pour des pores de 100 µm² ou plus dans une section transversale de gel, dans lequel la porosité est le rapport de la surface totale des pores à la surface de la section transversale lorsque la section transversale du gel est observée au microscope électronique ;
(F) une porosité de pore la plus grande de 3 à 6 % dans la section transversale de gel, dans lequel la porosité de pore la plus grande est le rapport de l'aire du pore le plus grand à l'aire de la section transversale du gel ; et
(G) le gel ayant subi une dénaturation par congélation.

2. Gel de konjak selon la revendication 1, comprenant en outre la caractéristique suivante (H) :
(H) une teneur en amidon modifié de 4,5 à 18 % en poids.

3. Procédé de production d'un gel de konjak selon la revendication 1 ou 2, comprenant :
une étape de préparation de pâte consistant à mélanger du glucomannane en une quantité de 2,5 à 4 % en poids sur la base du poids d'une pâte, un agent alcalin et de l'eau pour préparer la pâte avec un pH de 10 à 11 ;
une étape de mise en forme consistant à mettre en forme la pâte préparée ;
une étape de cuisson à la vapeur de la pâte mise en forme pour préparer un matériau gélatineux ;
une étape de congélation du matériau gélatineux préparé ;
une étape de déchiquetage consistant à déchiqueter le matériau gélatineux congelé en morceaux d'un long côté de 7 à 20 mm et d'une épaisseur de 0,5 à 1,5 mm ; et
une étape de formation de corps poreux consistant à soumettre chaque matériau gélatineux déchiqueté à des micro-ondes ou à un séchage sous pression réduite pour rendre le matériau poreux avec une humidité de 70 à 90 % en poids, une porosité de 9 à 17 % telle que mesurée pour des pores de 100 µm² ou plus dans une section transversale de gel, et une porosité de pore la plus grande de 3 à 6 %.

4. Procédé de production d'un gel de konjak selon la revendication 3, dans lequel de 3,5 à 8 % en poids d'amidon modifié sur la base du poids de la pâte sont ajoutés dans l'étape de préparation de pâte.

5. Procédé de production d'un aliment de type crevette contenant un gel de konjak selon la revendication 1 ou 2, et un substrat, le procédé comprenant :
une étape de préparation de gel de konjak consistant à mélanger 2,5 à 4 % en poids de glucomannane sur la base du poids d'une pâte, un agent alcalin et de l'eau pour préparer la pâte avec un pH de 10 à 11, puis à mettre en forme et à cuire à la vapeur la pâte pour la gélification, la congélation et le déchiquetage de la pâte gélatineuse avec un côté long de 7 à 20 mm et une épaisseur de 0,5 à 1,5 mm, puis à soumettre le matériau résultant à des micro-ondes ou à un séchage sous pression réduite pour préparer un gel de konjak poreux ayant une humidité de 70 à 90 % en poids, une porosité de 9 à 17 % telle que mesurée pour des pores de 100 µm² ou plus dans une section transversale de gel, et une porosité de pore la plus grande de 3 à 6 % ;
une étape de préparation de substrat consistant à mélanger, sur la base du poids d'un substrat, de 3 à 4,5 % en poids de glucomannane, de 1 à 3 % en poids de matériau protéique, de 8 à 15 % en poids d'amidon modifié, un agent alcalin et de l'eau pour préparer le substrat avec un pH de 9,5 à 10,5 ;
une étape de mélange consistant à mélanger le substrat et le gel de konjak selon un rapport de 3:7 à 7:3 pour préparer un mélange ;
une étape de mise en forme consistant à mettre en forme le mélange pour préparer un matériau mis en forme ; et
une étape de chauffage consistant à cuire à la vapeur le matériau mis en forme pour qu'il soit solidifié thermiquement.

6. Procédé de production de l'aliment de type crevette selon la revendication 5, comprenant en outre, après l'étape de chauffage, une étape de séchage consistant à sécher une surface du matériau mis en forme solidifié thermiquement.

7. Procédé de production d'un aliment lyophilisé sous vide de type crevette contenant un gel de konjak selon la revendication 1 ou 2, et un substrat contenant un matériau de gel de konjak pulvérisé, le procédé comprenant :
une étape de préparation de gel de konjak consistant à mélanger 2,5 à 4 % en poids de glucomannane sur la base du poids d'une pâte pour le gel de konjak, un agent alcalin et de l'eau pour préparer la pâte de gel de konjak avec un pH de 10 à 11, puis à mettre en forme et à cuire à la vapeur la pâte de gel de konjak pour la gélification, la congélation et le déchiquetage de la pâte de gel de konjak gélatineuse avec un côté long de 7 à 20 mm et une épaisseur de 0,5 à 1,5 mm, puis à soumettre le matériau résultant à des micro-ondes ou à un séchage sous pression réduite pour préparer un gel de konjak poreux présentant une humidité de 70 à 90 % en poids, une porosité de 9 à 17 % telle que mesurée pour des pores de 100 µm² ou plus dans une section transversale de gel, et une porosité de pore la plus grande de 3 à 6 % ;
une étape de préparation de matériau de gel de konjak pulvérisé consistant à mélanger, sur la base d'un poids de pâte pour un matériau de gel de konjak pulvérisé, de 2 à 4,5 % en poids de glucomannane, de 1 à 12 % en poids d'amidon modifié, une substance alcaline et de l'eau pour préparer la pâte de matériau de gel de konjak pulvérisé avec un pH de 10 à 11, à mettre en forme et à cuire à la vapeur la pâte de matériau de gel de konjak pulvérisé pour la gélification, et à pulvériser la pâte pour préparer le matériau de gel de konjak pulvérisé ;
une étape de préparation de substrat consistant à mélanger, sur la base d'un poids d'une pâte pour un substrat, de 1,5 à 4 % en poids de glucomannane, un agent alcalin et de l'eau, puis à mélanger la pâte de substrat préparée à un pH de 10 à 11 et le matériau de gel de konjak pulvérisé, de sorte que le substrat contienne de 10 à 80 % en poids du matériau de gel de konjak pulvérisé, pour préparer le substrat contenant le matériau de gel de konjak pulvérisé ;
une étape de préparation de mélange consistant à mélanger le gel de konjak et le substrat à un rapport de 3:7 à 7:3 pour préparer un mélange ;
une étape de mise en forme consistant à mettre en forme le mélange pour préparer un matériau mis en forme ;
une étape de chauffage consistant à chauffer le matériau mis en forme dans l'étape de mise en forme pour qu'il soit solidifié thermiquement ; et
une étape de lyophilisation sous vide consistant à congeler le matériau mis en forme solidifié thermiquement pour qu'il soit lyophilisé sous vide.

8. Procédé de production d'un aliment lyophilisé sous vide de type crevette contenant un gel de konjak selon la revendication 1 ou 2, et un substrat, le procédé comprenant :
une étape de préparation de gel de konjak consistant à mélanger 2,5 à 4 % en poids de glucomannane sur la base du poids d'une pâte pour le gel de konjak, un agent alcalin et de l'eau pour préparer la pâte de gel de konjak avec un pH de 10 à 11, puis à mettre en forme et à cuire à la vapeur la pâte de gel de konjak pour la gélification, la congélation et le déchiquetage de la pâte de gel de konjak gélatineuse avec un côté long de 7 à 20 mm et une épaisseur de 0,5 à 1,5 mm, puis à soumettre le matériau résultant à des micro-ondes ou à un séchage sous pression réduite pour préparer un gel de konjak poreux présentant une humidité de 70 à 90 % en poids, une porosité de 9 à 17 % telle que mesurée pour des pores de 100 µm² ou plus dans une section transversale de gel, et une porosité de pore la plus grande de 3 à 6 % ;
une étape de préparation de substrat consistant à mélanger, sur la base du poids d'un substrat, de 1,5 à 4 % en poids de glucomannane, de 0,1 à 0,6 % en poids d'un agent alcalin, de 1 à 3 % en poids de bicarbonate de sodium ou de 1 à 3 % en poids d'un émulsifiant moussant, et de l'eau pour préparer le substrat ;
une étape de préparation de mélange consistant à mélanger le gel de konjak et le substrat à un rapport de 3:7 à 7:3 pour préparer un mélange ;
une étape de mise en forme consistant à mettre en forme le mélange pour préparer un matériau mis en forme ;
une étape de chauffage consistant à chauffer le matériau mis en forme dans l'étape de mise en forme pour qu'il soit solidifié thermiquement ; et
une étape de lyophilisation sous vide consistant à congeler le matériau mis en forme solidifié thermiquement pour qu'il soit lyophilisé sous vide.
